# EUROPEAN PATENT SPECIFICATION

(11) **EP 2 651 080 B1**
(45) Date of publication and mention of the grant of the patent: **21.12.2016**
(21) Application number: 11855857.6
(22) Date of filing: 04.11.2011
(51) Int. Cl.: H04L 12/70

(54) **POLICY CONTROL METHOD AND SYSTEM**
RICHTLINIENSTEUERUNGSVERFAHREN UND -SYSTEM
PROCÉDÉ ET SYSTÈME DE COMMANDE DE POLITIQUE

(30) Priority: 14.01.2011 CN 201110008179
(43) Date of publication of application: 16.10.2013
(73) Proprietor: ZTE Corporation, Shenzhen, Guangdong 518057 (CN)
(72) Inventor: ZHOU, Xiaoyun, Shenzhen Guangdong 518057 (CN); ZONG, Zaifeng, Shenzhen Guangdong 518057 (CN); BI, Yifeng, Shenzhen Guangdong 518057 (CN)
(74) Representative: Davies, Gregory Mark
(86) International application number: PCT/CN2011/081824
(87) International publication number: WO 2012/094919

(56) References cited:
- CN-A- 1 466 340
- CN-A- 1 536 900
- CN-A- 101 026 625
- "3rd Generation Partnership Project; Technical Specification Group Services and System Aspects; Study on Support of BBF Access Interworking (Release 11)", 3GPP STANDARD; 3GPP TR 23.839, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0, 30 November 2010 (2010-11-30), pages 1-105, XP050462032, [retrieved on 2010-11-30]
- ZTE: "Procedures for PCRF initiated S9* session establishment and procedures for WLAN as untrusted access interworking: attach, detach, handover", 3GPP DRAFT; S2-104387_WAS 4331 WAS 4190 WAS 3414 3GPP BBF WLAN CALL FLOWS FOR S2B AND S2C, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 3 September 2010 (2010-09-03), XP050459259, [retrieved on 2010-09-03]
- ZTE: "Discussion on an alternative architecture for BBF interworking via WLAN access", 3GPP DRAFT; S2-103412 DISCSSION ALTERNATIVE ARCHITECTURE FOR WLAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 24 August 2010 (2010-08-24), XP050458478, [retrieved on 2010-08-24]
- "3rd Generation Partnership Project; Technical Specification Group Services and System Aspects; Policy and charging control architecture (Release 11)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V11.0.1, 4 January 2011 (2011-01-04), pages 1-137, XP050462510, [retrieved on 2011-01-04]

## Description

### Technical Field

The present document relates to a policy control technique in the 3GPP and Broadband Forum (BBF) interconnection, and particularly, to a method and system for policy control.

### Background of the Related Art

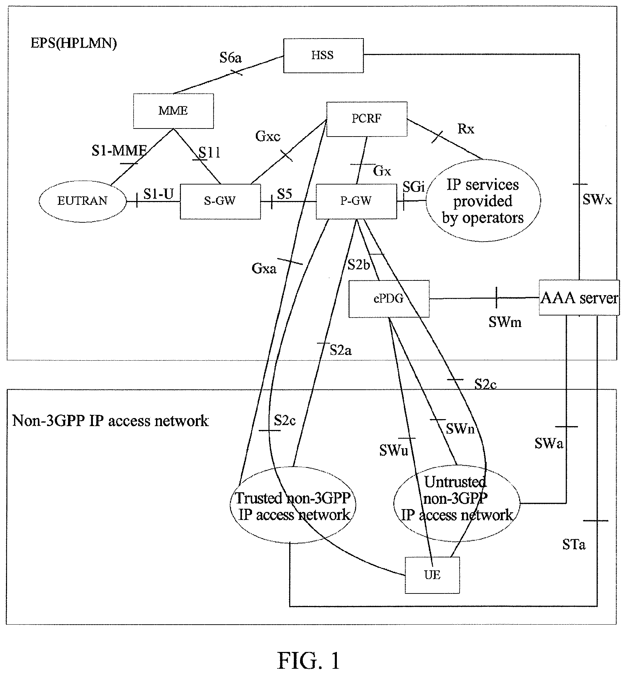

FIG. 1 is a schematic diagram of component architecture of the 3rd Generation Partnership Project (3GPP) Evolved Packet System (EPS), and in an EPS network architecture in a non-roaming scenario shown in FIG. 1, an Evolved Universal Terrestrial Radio Access Network (E-UTRAN), a Mobility Management Entity (MME), a Serving Gateway (S-GW), a Packet Data Network Gateway (P-GW, also called as PDN GW), a Home Subscriber Server (HSS), a Policy and Charging Rules Function (PCRF) entity and other support nodes are included.

Wherein, a PCRF is a core of Policy and Charging Control (PCC) and is responsible for making PCC rules. The PCRF provides network control rules based on service data flow, these network controls include detection of service data flow, gating control, Quality of Service (QoS) control and charging rules based on data flow and so on. The PCRF sends the PCC rules made by the PCRF to a Policy and Charging Enforcement Function (PCEF) to execute, meanwhile, the PCRF is also required to guarantee that these rules are consistent with user subscription information. A basis for the PCRF making the PCC rules includes: acquiring information related to services from an Application Function (AF); acquiring user PCC subscription information from a Subscription Profile Repository (SPR); and acquiring network information related to bearer from the PCEF.

The EPS supports an interconnection between the EPS and a non-3GPP system, the interconnection between the EPS and the non-3GPP system is implemented through interfaces S2a/b/c, and the P-GW serves as an anchor between the 3GPP system and the non-3GPP system. As shown in FIG. 1, the non-3GPP system is divided into a trusted non-3GPP IP access and an untrusted non-3GPP IP access. The trusted non-3GPP IP access can be connected to the P-GW directly through an interface S2a; the untrusted non-3GPP IP is required to connect to the P-GW through an Evolved Packet Data Gateway (ePDG), an interface between the ePDG and the P-GW is an interface S2b, and an Internet Protocol Security (IPSec) is adopted to perform encipherment protection on signalings and data between a User Equipment (UE) and the ePDG. An interface S2c provides control and mobility support related to a user plane between the User Equipment (UE) and the P-GW, and a mobility management protocol supported by the interface S2c is a Mobile IPv6 support for dual stack Hosts and Routers (DSMIPv6).

Currently, many operators pay attention to the Fixed Mobile Convergence (FMC) and conduct research with respect to the 3GPP and Broadband Forum (BBF) interconnection. With regard to a scenario of a user accessing a mobile core network through a BBF, it is required to guarantee the QoS on the entire transmission path of the data (the data will be transmitted through a fixed network and a mobile network). Currently, an interaction is performed through the PCRF and a Broadband Policy Control Framework (BPCF) in the BBF access to guarantee the QoS. The BPCF is a policy control framework in the BBF access, and for resource request message of the PCRF, the BPCF performs resource admission control or schedules the resource request message to other network elements (e.g. a Broadband Network Gateway (BNG)) of a BBF access network according to network policies and subscription information and so on of the BBF access, and the other network elements execute the resource admission control (i.e. entrusting the other network elements to execute the resource admission control). For example, when the UE accesses a 3GPP core network through a Wireless Local Area Network (WLAN), in order to guarantee that a total bandwidth demand of all UE access services accessing through a WLAN access line does not exceed a bandwidth of the line (e.g. a subscription bandwidth or a maximum physical agent supported by the line), the PCRF is required to interact with the BPCF when performing QoS authorization, so that the BBF access network executes the resource admission control.

At present, the study of the 3GPP and BBF interconnection mainly includes two aspects: a scenario of the 3GPP UE accessing an Evolved Packet Core (EPC) through the WLAN of the BBF and a scenario of the 3GPP UE accessing the 3GPP core network through a home evolved Node-B (H(e)NB), wherein the H(e)NB takes the BBF access network as a routing path (Backhaul) to connect to the 3GPP core network.

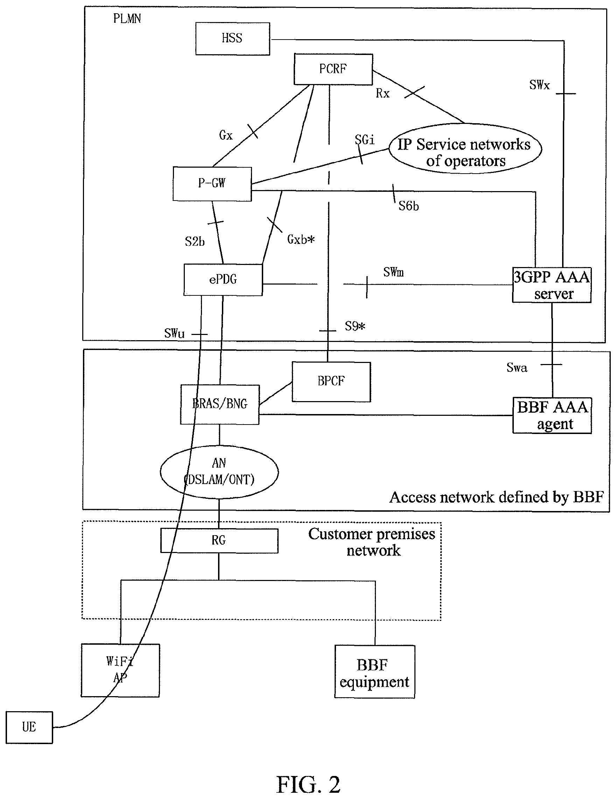

FIG. 2 is a schematic diagram of the 3GPP UE accessing the 3GPP core network through the WLAN, and as shown in FIG. 2, the BBF access network is taken as an untrusted non-3GPP access. Based on the architecture shown in FIG. 2, there are 3 ways for initiating a policy interconnection session (i.e. S9*) establishment at present.

In way 1, after the UE accesses the BBF access network, a Broadband Remote Access Server (BRAS)/Broadband Network Gateway (BNG) will execute an access authentication based on the 3GPP, and meanwhile, the BPCF of the BBF initiates an S9* session actively to interact with the PCRF of the 3GPP. Therefore, the PCRF can interact with the BPCF when performing the QoS authorization, and the BPCF executes the resource admission control or entrusts other network elements to execute the resource admission control.

In way 2, when the UE accesses the BBF access network, the access authentication based on the 3GPP is not executed. After the UE interacts with the ePDG to establish an IPSec tunnel, the ePDG sends a local address of the UE (i.e. an address allocated by the BBF access network to the UE) to the P-GW, the P-GW then sends the local address of the UE to the PCRF, and after determining the BPCF according to the local address of the UE, the PCRF reversely initiates an S9* session establishment to perform an interaction with the BPCF. Therefore, the PCRF can interact with the BPCF when performing the QoS authorization, and the BPCF executes the resource admission control or entrusts other network elements to execute the resource admission control.

In way 3, when the UE accesses the BBF access network, the access authentication based on the 3GPP is not executed. After the UE interacts with the ePDG to establish an IPSec tunnel, the ePDG directly sends a local address of the UE (i.e. an address allocated by the BBF access network to the UE) to the PCRF, and after determining the BPCF according to the local address of the UE, the PCRF reversely initiates an S9* session establishment to perform an interaction with the BPCF. Therefore, the PCRF can interact with the BPCF when performing the QoS authorization, and the BPCF executes the resource admission control or entrusts other network elements to execute the resource admission control.

If the UE requires the network to allocate resources to the UE when the UE performs service access, the PCRF firstly sends QoS information of the made PCC rules to the BPCF, so that the BBF access network executes the admission control. Then, the PCRF sends a PCC rule accepted by the BBF access network to the PCEF. The PCEF performs Differentiated Services Code Point (DSCP) marking on a header of an IP packet of a corresponding data flow (called as an internal packet header) according to the PCC rule, when the IP packets of the service data flow reach the ePDG, the ePDG will perform IPSec encapsulation on the IP packet and perform marking on a header of an IP packet of IPSec (called as an outer packet header) according to a DSCP of the header of the IP packet (i.e. the internal packet header) during the encapsulation. Therefore, the BBF access network can perform data packet scheduling according to a DSCP of the header of the IP packet of the IPSec.

However, a premise of the above scheme is that the 3GPP network supports an interconnection between the 3GPP network and the BBF, when the PCRF does not support an interconnection between the PCRF and the BBF (including a scenario that PCC is not deployed in the 3GPP network), the PCRF will not interact with the BPCF to request the admission control. Thus it will cause that the PCC rules sent by the PCRF to the PCEF are results which are decided according to the PCRF itself. The PCEF performs DSCP marking on headers of IP packets of service data flows according to the PCC rules sent by the PCRF or policies locally configured by the PCEF (with respect to a scenario that PCC is not deployed in the 3GPP network). When these service data flows reach the ePDG, the ePDG replicates the DSCP of the outer packet header of the IPSec according to the DSCP marks of the internal packet header. If these data reach the BBF access network, the BBF access network will not distinguish whether these service data flows go through the admission control of the BBF access network, but only perform dispatching according to the DSCP. Thus, these service data flows without going through the admission control will occupy resources of other service data flows going through the admission control, which leads to a failure of the entire FMC policy control mechanism currently.

When the UE accesses the 3GPP through an untrusted non-BBF access network by using a DSMIPv6 protocol, there are 2 ways for initiating a policy interconnection session (i.e. S9*) establishment at present.

In way 1, after the UE accesses the BBF access network, the BRAS/BNG will execute an access authentication based on the 3GPP, and meanwhile, the BPCF of the BBF initiates an S9* session actively to interact with the PCRF of the 3GPP. Therefore, the PCRF can interact with the BPCF when performing QoS authorization, and the BPCF executes the resource admission control or entrusts other network elements to execute the resource admission control.

In way 2, when the UE accesses the BBF access network, the access authentication based on the 3GPP is not executed. After the UE interacts with the ePDG to establish an IPSec tunnel, the ePDG directly sends a local address of the UE (i.e. an address allocated by the BBF access network to the UE) to the PCRF, and after determining the BPCF according to the local address of the UE, the PCRF reversely initiates an S9* session establishment to perform an interaction with the BPCF. Therefore, the PCRF can interact with the BPCF when performing the QoS authorization, and the BPCF executes the resource admission control or entrusts other network elements to execute the resource admission control.

If the UE requires the network to allocate resources to the UE when the UE performs service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of an IP packet of a corresponding data flow (called as an internal packet header) according to the PCC rule, when the IP packets of the service data flow reach the ePDG, the ePDG will perform IPSec encapsulation on the IP packet and perform marking on a header of an IP packet of an IPSec (called as an outer packet header) according to a DSCP of the header of the IP packet (i.e. the internal packet header) during the encapsulation. Therefore, the BBF access network can perform data packet scheduling according to a DSCP of the header of the IP packet of the IPSec.

Similarly, a premise of the above scheme is that the 3GPP network supports an interconnection between the 3GPP network and the BBF, when the PCRF does not support an interconnection between the PCRF and the BBF (including a scenario that PCC is not deployed in the 3GPP network), the PCRF will not interact with the BPCF to request the admission control. The service data flows without going through the admission control will occupy resources of other service data flows going through the admission control, which leads to a failure of the entire FMC policy control mechanism currently.

When the UE accesses the 3GPP through a trusted non-BBF access network by using a DSMIPv6 protocol, there are also 2 ways for initiating a policy interconnection session (i.e. S9*) establishment in the related art.

In way 1, after the UE accesses the BBF access network, the BRAS/BNG will execute an access authentication based on the 3GPP, and meanwhile, the BPCF of the BBF initiates an S9* session actively to interact with the PCRF of the 3GPP. Therefore, the PCRF can interact with the BPCF when performing the QoS authorization, and the BPCF executes the resource admission control or entrusts other network elements to execute the resource admission control.

In way 2, when the UE accesses the BBF access network, the access authentication based on the 3GPP is not executed. After the UE interacts with the P-GW to establish an IPSec security association, the P-GW directly sends a local address of the UE (i.e. an address allocated by the BBF access network to the UE) to the PCRF, and after determining the BPCF according to the local address of the UE, the PCRF reversely initiates an S9* session establishment to perform an interaction with the BPCF. Therefore, the PCRF can interact with the BPCF when performing the QoS authorization, and the BPCF executes the resource admission control or entrusts other network elements to execute the resource admission control.

If the UE requires the network to allocate resources to the UE when the UE performs service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of an IP packet of a corresponding data flow according to the PCC rule. When the IP packets of the service data flow reach the BBF access network, the BBF access network can perform data packet scheduling according to the DSCP of the header of the IP packet.

Similarly, a premise of the above scheme is that the 3GPP network supports an interconnection between the 3GPP network and the BBF, when the PCRF does not support an interconnection between the PCRF and the BBF (including a scenario that PCC is not deployed in the 3GPP network), the PCRF will not interact with the BPCF to request the admission control. The service data flows without going through the admission control will occupy resources of other service data flows going through the admission control, which leads to a failure of the entire FMC policy control mechanism currently.

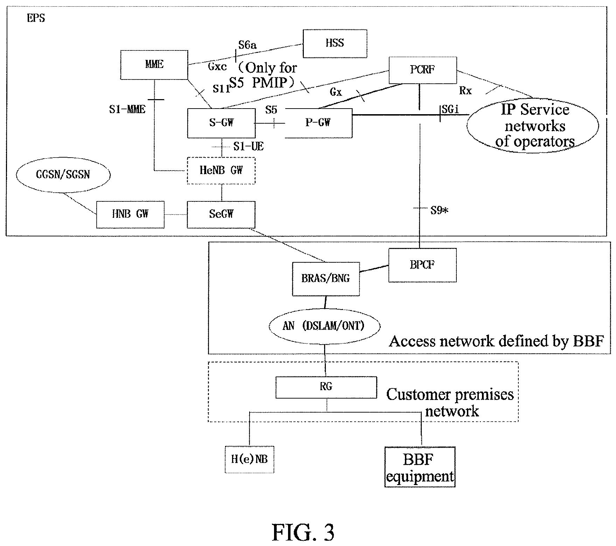

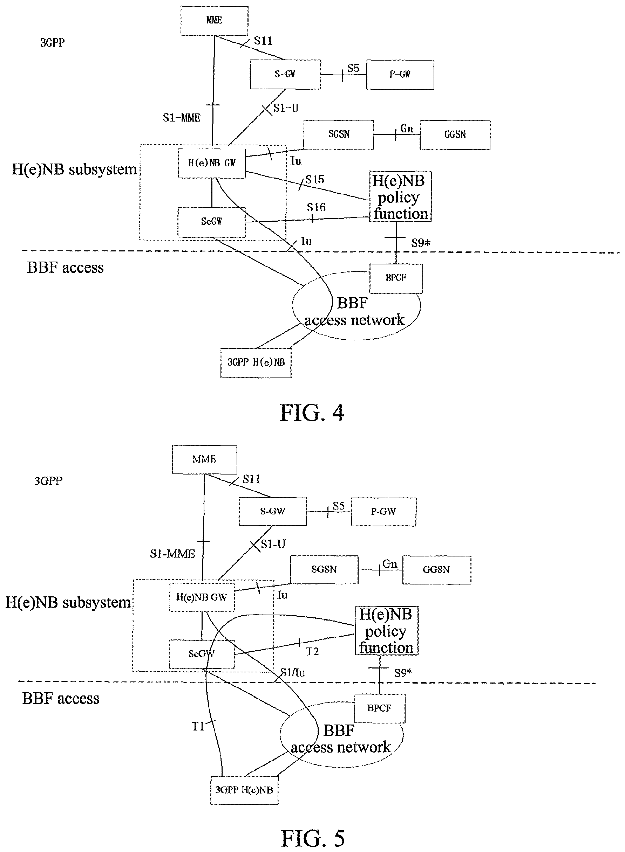

FIG. 3, FIG. 4 and FIG. 5 are schematic diagrams of architectures of the 3GPP UE accessing the 3GPP core network through an H(e)NB, wherein the H(e)NB takes the BBF access network as a Backhaul to be connected to the 3GPP core network. In the architecture of FIG. 3, the PCRF is directly interfaced with the BPCF, when the PCRF performs the QoS authorization, the PCRF firstly interacts with the BPCF, after the BBF access network performs the admission control successfully, the PCRF sends the PCC rules and QoS rules (if required) to the PCEF and a Bearing Binding and Event Report Function (BBERF) (if exists) respectively, the PCEF and the BBERF perform DSCP marking on downlink data of a service data flow according to the PCC rules and QoS rules, and when the service data flow reaches a Security Gateway (SeGW), the SeGW will perform IPSec encapsulation on an IP packet and perform marking on a header of an IP packet of the IPSec (called as an outer packet header) according to a DSCP of the IP packet (i.e. an internal packet header) during the encapsulation. Therefore, the BBF access network can perform data packet scheduling according to the DSCP of the header of the IP packet of the IPSec. With regard to uplink data, the H(e)NB performs IPSec encapsulation on the IP packet and performs marking on the header of the IP packet of the IPSec (called as the outer packet header) according to the DSCP of the IP packet (i.e. the internal packet header) during the encapsulation. In the architectures of FIG. 4 and FIG. 5, a function entity of H(e)NB Policy Function (H(e)NB PF) is introduced, when an H(e)NB GW (FIG. 4) or an H(e)NB (FIG. 5) receives a bearer establishment request or a bearer modification request from the 3GPP core network (the establishment or modification of the bearer is initiated after the PCEF or BBERF performs bearing binding according to the PCC rules or QoS rules of the PCRF, or is initiated after the P-GW or S-GW performs bearing binding according to the local policies), the H(e)NB GW or the H(e)NB requests the BBF access network for the admission control through the H(e)NB PF. After an admission control response success of the BBF access network is received, the H(e)NB GW can continue to complete a bearer establishment flow or a bearer modification flow. Then, the PCEF and the BBERF perform DSCP marking according to the PCC rules and QoS rules, and when the downlink data of the service data flow reach the SeGW, the SeGW will perform IPSec encapsulation on the IP packet and perform marking on the header of the IP packet of the IPSec (called as the outer packet header) according to the DSCP of the IP packet (i.e. the internal packet header) during the encapsulation. With regard to the uplink data, the H(e)NB performs IPSec encapsulation on the IP packet and performs marking on the header of the IP packet of the IPSec (called as the outer packet header) according to the DSCP of the IP packet (i.e. the internal packet header) during the encapsulation. Therefore, the BBF access network can perform data packet scheduling according to the DSCP of the header of the IP packet of the IPSec.

However, the premise of the three architecture schemes is that the 3GPP network also supports an interconnection between the 3GPP network and the BBF (FIG. 3 is for an interconnection between the PCRF and the BPCF, FIG. 4 and FIG. 5 are for an interconnection between the H(e)NB PF and the BPCF), with regard to FIG. 3, when the PCRF does not support an interconnection between the PCRF and the BBF, the PCRF will not interact with the BPCF to request the admission control. Thus it will cause that the PCC rules sent by the PCRF to the PCEF are results which are decided according to the PCRF itself. The PCEF performs DSCP marking on headers of downlink IP packets of service data flows according to the PCC rules sent by the PCRF. When these service data flows reach the SeGW, the SeGW replicates the DSCP of the outer packet header of the IPSec according to the DSCP marks of the internal packet header. If these data reach the BBF access network, the BBF access network will not distinguish whether these service data flows go through the admission control of the BBF access network, but only perform dispatching according to the DSCP. With regard to uplink data flows, the H(e)NB similarly performs IPSec encapsulation on the IP packet of uplink data and performs marking on the header of the IP packet of the IPSec (called as the outer packet header) according to the DSCP of the IP packet (i.e. the internal packet header) during the encapsulation. Thus, these service data flows without going through the admission control will occupy resources of other service data flows going through the admission control, which leads to a failure of the entire FMC policy control mechanism currently.

If we consider a scenario that the 3GPP UE and the fixed network entity of BBF exist eternally, those service data flows of the fixed network entity without going through the admission control also may occupy resources of service data flows of the 3GPP UE going through the admission control.

Document "3rd Generation Partnership Project; Technical Specification Group Services and System Aspects; Study on Support of BBF Access Interworking (Release 11)" (2010-11-30), XP050462032, describes that the BBF network makes packet classification based on the DSCP of the incoming packets and the PGW in the 3GPP domain sets a per-flow DSCP marking on each packet outer header.

### Summary of the Invention

The technical problem required to be solved by the present document is to provide a method and system for policy control as defined in the independent claims, by which service data flows without going through admission control of a BBF access network will not to occupy resources of service data flows going through the admission control of the BBF access network.

A policy control method comprises:
a 3rd Generation Partnership Project (3GPP) network entity sending outer IP packet header information to a Broadband Forum (BBF) access network entity;
the BBF access network entity scheduling a data packet matching the outer IP packet header information according to a Differentiated Services Code Point (DSCP) of the data packet.

The method further comprises: the BBF access network entity scheduling a data packet mismatching the outer IP packet header information according to a local policy.

Wherein, the step of a 3GPP network entity sending outer IP packet header information to a BBF access network entity comprises:
an Evolved Packet Data Gateway (ePDG) of a 3GPP network sending the outer IP packet header information to a Policy and Charging Rules Function (PCRF) through a Packet Data Network Gateway (P-GW), the PCRF sending the outer IP packet header information to a Broadband Policy Control Framework (BPCF) of a BBF access network, and the BPCF sending the outer IP packet header information to the BBF access network entity; or,
the ePDG directly sending the outer IP packet header information to the PCRF, the PCRF sending the outer IP packet header information to the BPCF, and the BPCF sending the outer IP packet header information to the BBF access network entity; or,
the P-GW sending the outer IP packet header information to the PCRF, the PCRF sending the outer IP packet header information to the BPCF, and the BPCF sending the outer IP packet header information to the BBF access network entity; or
the ePDG sending the outer IP packet header information to the PCRF through the P-GW, the PCRF sending the outer IP packet header information to the BBF access network entity; or,
the ePDG directly sending the outer IP packet header information to the PCRF, the PCRF sending the outer IP packet header information to the BBF access network entity; or,
the P-GW sending the outer IP packet header information to the PCRF, the PCRF sending the outer IP packet header information to the BBF access network entity.

Wherein, the step of the PCRF sending the outer IP packet header information to the BPCF or the BBF access network entity comprises:
when performing quality of service authorization, the PCRF sending the outer IP packet header information to the BPCF or the BBF access network entity; or,
when initiating a policy interconnection session establishment to the BPCF, the PCRF sending the outer IP packet header information to the BPCF or the BBF access network entity.

Wherein, the step of a 3GPP network entity sending outer IP packet header information to a BBF access network entity comprises:
a Security Gateway (SeGW) of the 3GPP network sending the outer IP packet header information to an H(e)NB Policy Function (H(e)NB PF) of the BBF access network, the H(e)NB PF sending the outer IP packet header information to the BPCF, and the BPCF sending the outer IP packet header information to the BBF access network entity; or,
the SeGW sending the outer IP packet header information to the PCRF, the PCRF sending the outer IP packet header information to the BPCF, and the BPCF sending the outer IP packet header information to the BBF access network entity; or
the SeGW sending the outer IP packet header information to the H(e)NB PF, the H(e)NB PF sending the outer IP packet header information to the BBF access network entity; or,
the SeGW sending the outer IP packet header information to the PCRF, the PCRF sending the outer IP packet header information to the BBF access network entity.

Wherein, the step of the H(e)NB PF sending the outer IP packet header information to the BPCF or the BBF access network entity comprises:
when initiating a policy interconnection session establishment to the BPCF or the BBF access network entity, the H(e)NB PF sending the outer IP packet header information to the BPCF or the BBF access network entity;
the step of the PCRF sending the outer IP packet header information to the BPCF or the BBF access network entity comprises:
   when initiating the policy interconnection session establishment to the BPCF or the BBF access network entity, the PCRF sending the outer IP packet header information to the BPCF or the BBF access network entity.

Wherein, the outer IP packet header information at least comprises a local IP address of a User Equipment (UE).

Wherein, if an NA(P)T is detected between the UE and the ePDG or between the UE and the P-GW, the outer IP packet header information comprises a User Datagram Protocol (UDP) source port number and the local IP address of the UE.

Wherein, the UDP source port number is an IPSec UDP source port number or a UDP source port number of a DSMIP binding update signaling.

Wherein, the outer IP packet header information is a packet filter containing corresponding information.

Wherein, the outer IP packet header information at least comprises a local IP address of an H(e)NB.

Wherein, if an NA(P)T is detected between the H(e)NB and the SeGW, the outer IP packet header information comprises a UDP source port number and the local IP address of the H(e)NB.

Wherein, the UDP source port number is an IPSec UDP source port number.

Wherein, the outer IP packet header information is a packet filter containing corresponding information.

A policy control system comprises: a 3GPP network entity and a Broadband Forum (BBF) access network entity, wherein:
the 3GPP network entity is configured to: send outer IP packet header information to the BBF access network entity;
the BBF access network entity is configured to: schedule a data packet matching the outer IP packet header information according to a Differentiated Services Code Point (DSCP) of the data packet.
Wherein, the BBF access network entity is further configured to: schedule a data packet mismatching the outer IP packet header information according to a local policy.

The system further comprises: a Broadband Policy Control Framework (BPCF) of a BBF access network, wherein:
the 3GPP network entity comprises a Packet Data Network Gateway (P-GW), an Evolved Packet Data Gateway (ePDG) and a Policy and Charging Rules Function (PCRF), wherein:
   the ePDG is configured to: send the outer IP packet header information to the PCRF through the P-GW; or directly send the outer IP packet header information to the PCRF;
   the P-GW is configured to: assist the ePDG to send the outer IP packet header information to the PCRF; or send the outer IP packet header information to the PCRF by itself;
   the PCRF is configured to: send the outer IP packet header information to the BPCF or send the outer IP packet header information to the BBF access network entity;
   the BPCF is configured to: send the outer IP packet header information to the BBF access network entity.

Wherein, the PCRF is configured to send the outer IP packet header information to the BPCF or the BBF access network entity by the following way:
when performing quality of service authorization, sending the outer IP packet header information to the BPCF or the BBF access network entity; or,
when initiating a policy interconnection session establishment to the BPCF or the BBF access network entity, sending the outer IP packet header information to the BPCF or the BPCF.

The system further comprises a BPCF, wherein:
the 3GPP network entity comprises a Security Gateway (SeGW) and an H(e)NB Policy Function (H(e)NB PF), or comprises a SeGW and a PCRF, wherein:
   the SeGW is configured to: send the outer IP packet header information to the H(e)NB PF;
   the H(e)NB PF is configured to: send the outer IP packet header information to the BPCF;
   the BPCF is configured to: send the outer IP packet header information to the BBF access network entity; or,
   the 3GPP network entity comprises the SeGW and the PCRF, wherein:
      the SeGW is configured to: send the outer IP packet header information to the PCRF;
      the PCRF is configured to: send the outer IP packet header information to the BPCF or the BBF access network entity;
      the BPCF is configured to: send the outer IP packet header information to the BBF access network entity.

Wherein, the H(e)NB PF or the PCRF is configured to send the outer IP packet header information to the BPCF or the BBF access network entity by the following way:
when initiating a policy interconnection session establishment to the BPCF or the BBF access network entity, sending the outer IP packet header information to the BPCF or the BBF access network entity.

Wherein, the outer IP packet header information at least comprises a local IP address of a User Equipment (UE).

Wherein, if an NA(P)T is detected between the UE and the ePDG or between the UE and the P-GW, the outer IP packet header information comprises a UDP source port number and the local IP address of the UE.

Wherein, the UDP source port number is an IPSec UDP source port number or a UDP source port number of a DSMIP binding update signaling.

Wherein, the outer IP packet header information is a packet filter containing corresponding information.

Wherein, the outer IP packet header information at least comprises a local IP address of an H(e)NB.

Wherein, if an NA(P)T is detected between the H(e)NB and the SeGW, the outer IP packet header information comprises a UDP source port number and the local IP address of the H(e)NB.

Wherein, the UDP source port number is an IPSec UDP source port number.

Wherein, the outer IP packet header information is a packet filter containing corresponding information.

A Broadband Forum (BBF) access network system comprises a BBF access network entity, wherein:
the BBF access network entity is configured to: receive outer IP packet header information sent by a 3GPP network, and schedule a data packet matching the outer IP packet header information according to a Differentiated Services Code Point (DSCP) of the data packet.
Wherein, the BBF access network entity is further configured to: schedule a data packet mismatching the outer IP packet header information according to a local policy.

The system further comprises: a Broadband Policy Control Framework (BPCF), wherein:
the BPCF is configured to: after an Evolved Packet Data Gateway (ePDG) of the 3GPP network sends the outer IP packet header information to a Policy and Charging Rules Function (PCRF) through a Packet Data Network Gateway (P-GW), receive the outer IP packet header information sent by the PCRF; or after the ePDG directly sends the outer IP packet header information to the PCRF, receive the outer IP packet header information sent by the PCRF; or after the P-GW sends the outer IP packet header information to the PCRF, receive the outer IP packet header information sent by the PCRF, and send the outer IP packet header information to the BBF access network entity; or,
receive the outer IP packet header information sent by a Security Gateway (SeGW) of the 3GPP network through an H(e)NB Policy Function (H(e)NB PF) of a BBF access network; or receive the outer IP packet header information sent by the SeGW through the PCRF, and send the outer IP packet header information to the BBF access network entity.

Wherein, the BPCF is further configured to: receive the outer IP packet header information sent by the PCRF when performing quality of service authorization; or,
receive the outer IP packet header information sent by the PCRF when initiating a policy interconnection session establishment to the BPCF; or,
receive the outer IP packet header information sent by the H(e)NB PF or the PCRF when initiating a policy interconnection session establishment to the BPCF.

In the above technical scheme, the BBF access network saves outer IP packet headers, when the data reach the BBF access network, the BBF access network entity firstly performs filtering according to the saved outer IP packet headers, and only when service data flows of the outer IP packet headers are matched, performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control.

### Brief Description of Drawings

FIG. 1 is a schematic diagram of the component architecture of the EPS.
FIG. 2 is a schematic diagram of a UE accessing the 3GPP core network through a WLAN accessing network.
FIG. 3 is a schematic diagram 1 of a UE accessing the 3GPP core network through an H(e)NB.
FIG. 4 is a schematic diagram 2 of a UE accessing the 3GPP core network through an H(e)NB.
FIG. 5 is a schematic diagram 3 of a UE accessing the 3GPP core network through an H(e)NB.
FIG. 6 is a flow diagram 1 of an S9* session according to the example 1 of the present document.
FIG. 7 is a flow diagram 2 of an S9* session according to the example 2 of the present document.
FIG. 8 is a flow diagram 3 of an S9* session according to the example 3 of the present document.
FIG. 9 is a flow diagram of a BBF access network entity obtaining outer IP packet headers in the process of a UE attaching to an EPS under the architecture shown in FIG. 3, according to the example 4 of the present document.
FIG. 10 is a flow diagram of a BBF access network entity obtaining outer IP packet headers after an H(e)NB is power-on under the architecture of FIG. 4, according to the example 5 of the present document.
FIG. 11 is a flow diagram of a BBF access network entity obtaining outer IP packet headers after an H(e)NB is power-on under the architecture of FIG. 5, according to the example 6 of the present document.

### Preferred Embodiments of the Invention

The present document provides a policy control method, which includes:
a 3GPP network sending an outer IP packet header to a BBF access network entity;
the BBF access network entity schedule a data packet matching the outer IP packet header according to a Differentiated Services Code Point (DSCP) of the data packet, and schedule a data packet mismatching the outer IP packet header according to a local policy.

Wherein, the outer IP packet header is an outer IP packet header of an IPSec tunnel. The IPSec tunnel is an IPSec tunnel between a user equipment and an Evolved Packet Data Gateway (ePDG), or between a user equipment and a P-GW, or between an H(e)NB and a security gateway.

Wherein, the step of a 3GPP network sending the outer IP packet header to a BBF access network entity includes:
(1) The Evolved Packet Data Gateway (ePDG) sending the outer IP packet header to the P-GW, and the P-GW sending the outer IP packet header to a PCRF; or the ePDG directly sending the outer IP packet header to the PCRF; or the P-GW sending the outer IP packet header to the PCRF;
   the PCRF sending the outer IP packet header to a BPCF; the PCRF sending the outer IP packet header to the BPCF when performing quality of service authorization; or the PCRF sending the outer IP packet header to the BPCF when initiating a policy interconnection session establishment to the BPCF.
(2) The Security Gateway (SeGW) sending the outer IP packet header to an H(e)NB Policy Function (H(e)NB PF) or PCRF;
   the H(e)NB PF or PCRF sending the outer IP packet header to the BPCF; the H(e)NB PF or PCRF sending the outer IP packet header to the BPCF when initiating a policy interconnection session establishment to the BPCF; and
   the BPCF sending the outer IP packet header to the BBF access network entity.

### Example 1

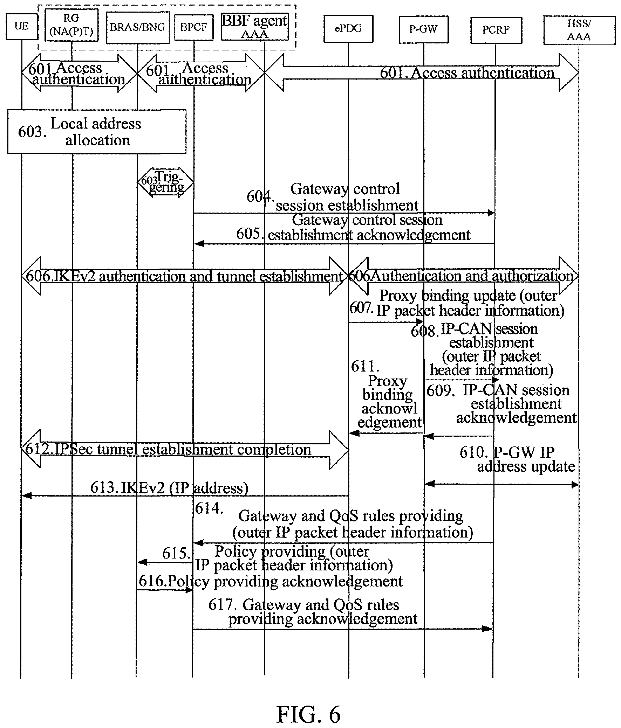

FIG. 6 is a flow diagram of a BPCF initiating an S9* session in a non-roaming scenario when a UE accesses a 3GPP core network through an untrusted BBF access network according to the example of the present document. In FIG. 6, a PMIPv6 protocol is adopted between an ePDG and a P-GW.

In step 601, after the UE accesses a BBF access system, an access authentication based on the 3GPP is executed, and the UE provides an International Mobile Subscriber Identity (IMSI) (used for the access authentication).

In step 602, the UE obtains a local IP address from the BBF access network. The address may be allocated by a Residential Gateway (RG) or a BNG.

In step 603, after the triggering of step 601 or step 602, the BPCF is informed of that the UE accesses the BBF access network.

In step 604, the BPCF sends gateway control session establishment message including a user identifier to a PCRF.

In step 605, the PCRF returns gateway control session establishment acknowledgement message to the BPCF. The PCRF may be required to interact with an SPR to acquire a subscription user policy decision of a user.

In step 606, after selecting the ePDG, the UE initiates an IKEv2 tunnel establishment process and performs an authentication using an Extensible Authentication Protocol (EAP). If NA(P)T exists between the UE and ePDG (e.g., the NA(P)T exists on the RG), an IKEv2 signaling will execute an NAT traversal.

In step 607, after selecting the P-GW, the ePDG sends proxy binding update message to the P-GW, and the user identifier, a PDN identifier and outer IP packet header information are carried in the proxy binding update message. With regard to an S2b scenario, all service data flows will be encapsulated with an IPSec tunnel between the UE and ePDG. Therefore, at the point, the outer IP packet header information can be outer IP packet header information of the IPSec tunnel established between the UE and ePDG. In order to uniquely identify this IPSec tunnel, the outer IP packet header information of the IPSec tunnel at least includes a source address in the IKEv2 signaling sent by the UE and received by the ePDG (i.e. an IPSec source address, with respect to an uplink direction of the UE). The outer IP packet header information of the IPSec tunnel also may include a UDP source port number in the IKEv2 signaling sent by the UE and received by the ePDG (i.e. an IPSec source port number, with respect to the uplink direction of the UE, also called as a UDP source port number, the same as below), an address of the ePDG, a receiving port number of the ePDG (i.e. a UDP target port number, with respect to the uplink direction of the UE) and protocol types and so on.

Since the IKEv2 signaling may have gone through the NA(P)T traversal, the source address and source port number received by the ePDG may be different from the source address and source port number when the UE performs sending. If the IKEv2 signaling does not go through the NA(P)T traversal, the source address is the local address obtained when the UE accesses the BBF access network.

With regard to a scenario of no NA(P)T existing between the UE and ePDG, the source address in the IKEv2 signaling sent by the UE and received by the ePDG is a local IP address allocated by the BBF access network, and the address can uniquely identify the service data flows of the UE encapsulated with the IPSec tunnel, thus the outer IP packet header information at least contains the local IP address.

With regard to a scenario of (1:1) NAT existing between the UE and ePDG, the source address in the IKEv2 signaling sent by the UE and received by the ePDG is a public network IP address after going through the NAT, but due to the 1:1 NAT, the address still can uniquely identify the service data flows of the UE encapsulated with the IPSec tunnel, thus the outer IP packet header information at least contains the source address in the IKEv2 signaling sent by the UE and received by the ePDG (i.e. the public network IP address after going through the NAT of the BBF access network, if the NAT is in the RG, the address is an address of the RG).

With regard to (N:1) NAT (i.e. NAPT) between the UE and ePDG, UDP encapsulation needs to be performed on the service data flows during the NAT traversal, and the NAPT will allocate the UDP source port number (with respect to the uplink direction of the UE) to the IPSec tunnel. Therefore, in order to uniquely identify the service data flows of the UE encapsulated with the IPSec tunnel, the outer IP packet header information at least contains the source address in the IKEv2 signaling sent by the UE and received by the ePDG (i.e. the public network IP address after going through the NAT of the BBF access network, if the NAT is in the RG, the address is the address of the RG) and the source port number in the IKEv2 signaling sent by the UE and received by the ePDG (i.e. an IPSec UDP source port number).

For the convenience of descriptions, the IP address of the UE after going through the NAT is also called as the local IP address. Therefore, the outer IP packet header information at least includes the local IP address of the UE. If the NA(P)T is detected between the UE and the ePDG, the outer IP packet header information also may include the IPSec UDP source port number. The outer IP packet header information also can include information such as the address of the ePDG, an IPSec UDP target port number (with respect to the uplink direction of the UE) and protocol types and so on.

Certainly, the outer IP packet header information can be a packet filter, and the packet filter at least contains the local IP address of the UE. If the NA(P)T is detected between the UE and the ePDG, the packet filter also may contain the IPSec UDP source port number. The packet filter also can contain information such as the address of the ePDG, an IPSec UDP target port number (with respect to the uplink direction of the UE) and protocol types and so on.

In step 608, the P-GW allocates an IP address to the UE, and a PCEF located in the P-GW sends IP-CAN session establishment indication message to the PCRF, and the user identifier, the PDN identifier, the IP address allocated to the UE and the outer IP packet header information are carried in the IP-CAN session establishment indication message.

In step 609, the PCRF makes a judgment according to the user identifier and PDN identifier, and if no relevant user subscription data exists, an H-PCRF will interact with the SPR to acquire the subscription data. The PCRF makes PCC rules according to the subscription data, network policies and access network attributes and so on, and returns acknowledgement message including the PCC rules to the PCEF.

In step 610, the P-GW sends P-GW IP address update message to an AAA Server and sends an address of the P-GW to the AAA Server, and the AAA Server further interacts with an HSS and saves the address of the P-GW into the HSS.

In step 611, the P-GW returns proxy binding acknowledgement message to the ePDG, and the IP address allocated to the UE is carried in the proxy binding acknowledgement message.

In step 612, the proxy binding update is successful, and the IPSec tunnel is established between the UE and ePDG.

In step 613, the ePDG sends a final IKEv2 signaling to the UE, wherein the IP address of the UE is included.

In step 614, the PCRF provides the outer IP packet header information to the BPCF.

In step 615, the BPCF provides the outer IP packet header information to a BBF access network entity (e.g. BNG/BRAS).

In step 616, the BBF access network entity (BNG/BRAS) returns acknowledgement message after saving outer IP packet headers.

In step 617, the BPCF returns acknowledgement message to the PCRF.

The step 614 can be executed after step 609.

Through the above flow, a session is established between the PCRF and BPCF, and the BBF access network (BNG/BRAS) obtains the outer IP packet header information. When the UE requires the network to allocate resources to the UE when performing service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of an IP packet of downlink data of a corresponding data flow (called as an internal packet header) according to the PCC rule, when the IP packets of the service data flow reach the ePDG, the ePDG will perform IPSec encapsulation on the IP packet and perform DSCP replication. When these data reach the BBF access network, the BBF access network entity firstly performs filtering according to the saved outer IP packet headers, and only when service data flows of the outer IP packet header information are matched, performs data scheduling according to DSCPs; with regard to the mismatched service data flows, the BBF access network entity performs processing according to the local policies (e.g., DSCPs with lower priorities are remarked). With regard to uplink data of the service data flows, the UE performs IPSec encapsulation and performs DSCP replication, when the data reach the BBF access network, the BBF access network entity firstly performs filtering according to the saved outer IP packet header information, and only when service data flows of the outer IP packet header information are matched, performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control.

### Example 2

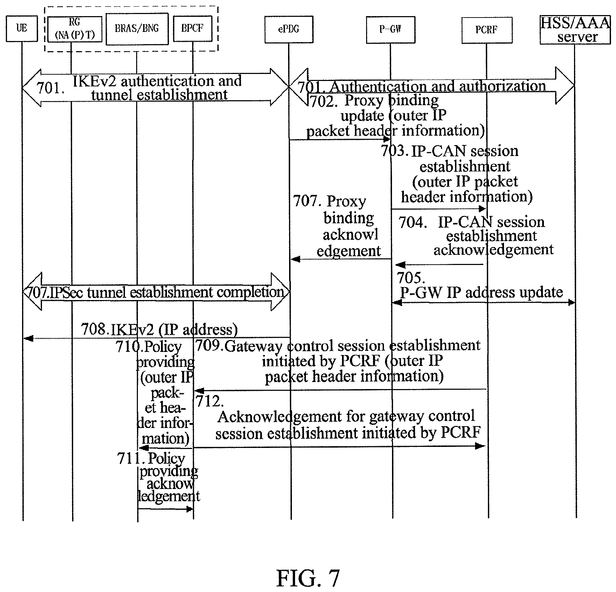

FIG. 7 is a flow diagram of a P-GW triggering a PCRF to initiate an S9* session in a non-roaming scenario when a UE accesses a 3GPP core network through an untrusted BBF access network according to the present document. In FIG. 7, a PMIPv6 protocol is adopted between an ePDG and the P-GW.

In step 701, after the UE accesses a BBF access system, the BBF access system allocates a local IP address to the UE. The UE initiates an IKEv2 tunnel establishment process and performs authentication using an EAP. The ePDG interacts with an AAA Server (the AAA Server further interacts with an HSS) to complete the EAP authentication.

In step 702, after selecting the P-GW, the ePDG sends proxy binding update message to the P-GW, and a user identifier, a PDN identifier and outer IP packet header information are carried in the proxy binding update message. With regard to an S2b scenario, all service data flows will be encapsulated with an IPSec tunnel between the UE and ePDG. Therefore, at the point, the outer IP packet header information can be outer IP packet header information of the IPSec tunnel established between the UE and ePDG. In order to uniquely identify this IPSec tunnel, the outer IP packet header information of the IPSec tunnel at least includes a source address in an IKEv2 signaling sent by the UE and received by the ePDG (i.e. an IPSec source address, with respect to an uplink direction of the UE). The outer IP packet header information of the IPSec tunnel also may include a source port number in the IKEv2 signaling sent by the UE and received by the ePDG (i.e. an IPSec source port number, with respect to the uplink direction of the UE), an address of the ePDG, a UDP receiving port number of the ePDG (i.e. a UDP target port number, with respect to the uplink direction of the UE) and protocol types and so on.

Since the IKEv2 signaling may have gone through the NAT traversal, the source address and source port number received by the ePDG may be different from the source address and source port number when the UE performs sending. If the IKEv2 signaling does not go through the NAT traversal, the source address is the local address obtained when the UE accesses the BBF access network.

With regard to a scenario of no NAT existing between the UE and ePDG, the source address in the IKEv2 signaling sent by the UE and received by the ePDG is a local IP address allocated by the BBF access network, and the address can uniquely identify the service data flows of the UE encapsulated with the IPSec tunnel, thus the outer IP packet header information at least contains the local IP address.

With regard to a scenario of (1:1) NAT existing between the UE and ePDG, the source address in the IKEv2 signaling sent by the UE and received by the ePDG is a public network IP address after going through the NAT, but due to the 1:1 NAT, the address still can uniquely identify the service data flows of the UE encapsulated with the IPSec tunnel, thus the outer IP packet header information at least contains the source address in the IKEv2 signaling sent by the UE and received by the ePDG (i.e. the public network IP address after going through the NAT of the BBF access network, if the NAT is in an RG, the address is an address of the RG).

With regard to (N:1) NAT (i.e. NAPT) between the UE and ePDG, UDP encapsulation needs to be performed on the service data flows during the NAPT traversal, and the NAPT will allocate a UDP source port number (with respect to the uplink direction of the UE) to the IPSec tunnel. Therefore, in order to uniquely identify the service data flows of the UE encapsulated with the IPSec tunnel, the outer IP packet header information at least contains the source address in the IKEv2 signaling sent by the UE and received by the ePDG (i.e. the public network IP address after going through the NAT of the BBF access network, if the NAPT is in an RG, the address is an address of the RG) and the source port number in the IKEv2 signaling sent by the UE and received by the ePDG (i.e. an IPSec UDP source port number).

For the convenience of descriptions, the IP address of the UE after going through the NAT is also called as the local IP address. Therefore, the outer IP packet header information at least includes the local IP address of the UE. If the NA(P)T is detected between the UE and the ePDG, the outer IP packet header information also may include the IPSec UDP source port number. The outer IP packet header information also can include information such as the address of the ePDG, an IPSec UDP target port number (with respect to the uplink direction of the UE) and protocol types and so on.

Certainly, during the specific implementation, the outer IP packet header information can be a packet filter, and the packet filter at least contains the local IP address of the UE. If the NA(P)T is detected between the UE and the ePDG, the packet filter also may contain the IPSec UDP source port number. The packet filter also can contain information such as the address of the ePDG, an IPSec UDP target port number (with respect to the uplink direction of the UE) and protocol types and so on.

In step 703, the P-GW allocates an IP address to the UE, and a PCEF located in the P-GW sends IP-CAN session establishment indication message to the PCRF, and the user identifier, the PDN identifier, the IP address allocated to the UE and the outer IP packet header information are carried in the IP-CAN session establishment indication message.

In step 704, the PCRF makes a judgment according to the user identifier and PDN identifier, and if no relevant user subscription data exists, the PCRF will interact with an SPR to acquire the subscription data. The PCRF makes PCC rules according to the subscription data, network policies and access network attributes and so on. The PCRF returns acknowledgement message including the PCC rules to the PCEF.

In step 705, the P-GW sends P-GW IP address update message to the AAA Server and sends an address of the P-GW to the AAA Server, and the AAA Server further interacts with the HSS and saves the address of the P-GW into the HSS.

In step 706, the P-GW returns proxy binding acknowledgement message to the ePDG, and the IP address allocated to the UE is carried in the proxy binding acknowledgement message.

In step 707, the proxy binding update is successful, and the IPSec tunnel is established between the UE and ePDG.

In step 708, the ePDG sends a final IKEv2 signaling to the UE, wherein the IP address of the UE is included.

In step 709, the PCRF determines a BPCF of the BBF access network which the UE accesses currently according to the outer IP packet header information, and sends gateway control session establishment message initiated by the PCRF to the BPCF, and the outer IP packet header information is included in the gateway control session establishment message.

The step 709 can be executed after step 703.

In step 710, the BPCF provides outer IP packet headers to a BBF access network entity (e.g. BNG/BRAS).

In step 711, the BBF access network entity returns acknowledgement message after saving the outer IP packet headers.

In step 712, the BPCF returns acknowledgement message to the PCRF.

Through the above flow, a session is established between the PCRF and BPCF, and the BBF access network entity (BNG/BRAS) obtains the outer IP packet header information. If the UE requires the network to allocate resources to the UE when the UE performs the service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of a downlink IP packet of a corresponding data flow (called as an internal packet header) according to the PCC rule, when the IP packets of the service data flow reach the ePDG, the ePDG will perform IPSec encapsulation on the IP packet and perform DSCP replication. When these data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). With regard to uplink data of the service data flows, the UE performs IPSec encapsulation and performs DSCP replication, when the data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control.

The example is also applied to roaming scenarios (including a home routing roaming scenario or a local breakout roaming scenario).

With regard to a scenario of adopting a GTP protocol between the ePDG and P-GW, the flow is similar. The ePDG will carry the outer IP packet header information in session establishment request message.

### Example 3

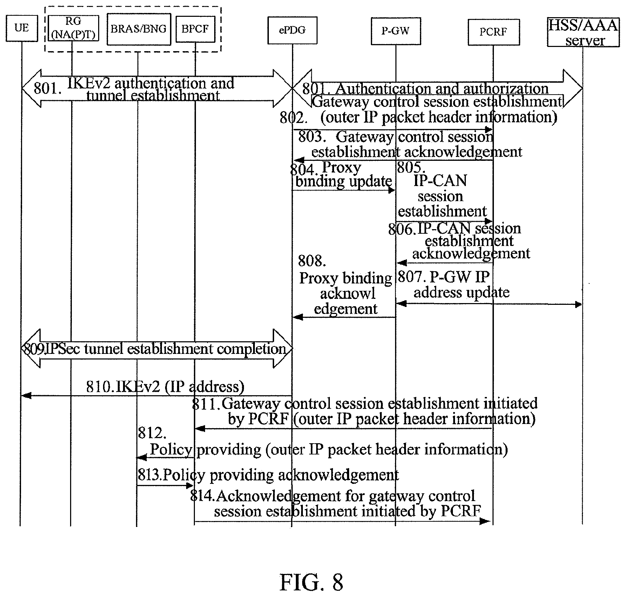

FIG. 8 is a flow diagram of a P-GW triggering a PCRF to initiate an S9* session in a non-roaming scenario when a UE accesses a 3GPP core network through an untrusted BBF access network according to the present document. In FIG. 8, a PMIPv6 protocol is adopted between an ePDG and the P-GW.

In step 801, after the UE accesses a BBF access system, the BBF access system allocates a local IP address to the UE. The UE initiates an IKEv2 tunnel establishment process and performs an authentication using an EAP. The ePDG interacts with an AAA Server (the AAA Server further interacts with an HSS) to complete the EAP authentication.

In step 802, the ePDG sends gateway control session establishment message including outer IP packet header information to the PCRF. With regard to an S2b scenario, all service data flows will be encapsulated with an IPSec tunnel between the UE and ePDG. Therefore, at the point, the outer IP packet header information can be outer IP packet header information of the IPSec tunnel established between the UE and ePDG. In order to uniquely identify this IPSec tunnel, the outer IP packet header information of the IPSec tunnel at least includes a source address in a IKEv2 signaling sent by the UE and received by the ePDG (i.e. an IPSec source address, with respect to an uplink direction of the UE). The outer IP packet header information of the IPSec tunnel also may include a source port number in the IKEv2 signaling sent by the UE and received by the ePDG (i.e. an IPSec source port number, with respect to the uplink direction of the UE), an address of the ePDG, a UDP receiving port number of the ePDG (i.e. a UDP target port number, with respect to the uplink direction of the UE) and protocol types and so on.

Since the IKEv2 signaling may have gone through the NAT traversal, the source address and source port number received by the ePDG may be different from the source address and source port number when the UE performs sending. If the IKEv2 signaling does not go through the NAT traversal, the source address is a local address obtained when the UE accesses the BBF access network.

With regard to a scenario of no NAT existing between the UE and ePDG, the source address in the IKEv2 signaling sent by the UE and received by the ePDG is a local IP address allocated by the BBF access network, and the address can uniquely identify the service data flows of the UE encapsulated with the IPSec tunnel, thus the outer IP packet header information at least contains the local IP address.

With regard to a scenario of (1:1) NAT existing between the UE and ePDG, the source address in the IKEv2 signaling sent by the UE and received by the ePDG is a public network IP address after going through the NAT, but due to the 1:1 NAT, the address still can uniquely identify the service data flows of the UE encapsulated with the IPSec tunnel, thus the outer IP packet header information at least contains the source address in the IKEv2 signaling sent by the UE and received by the ePDG (i.e. the public network IP address after going through the NAT of the BBF access network, if the NAT is in an RG, the address is an address of the RG).

With regard to (N:1) NAT (i.e. NAPT) between the UE and ePDG, UDP encapsulation needs to be performed on the service data flows during the NAPT traversal, and the NAPT will allocate a UDP source port number to the IPSec tunnel (with respect to the uplink direction of the UE). Therefore, in order to uniquely identify the service data flows of the UE encapsulated with the IPSec tunnel, the outer IP packet header information at least contains the source address in the IKEv2 signaling sent by the UE and received by the ePDG (i.e. the public network IP address after going through the NAT of the BBF access network, if the NAT is in an RG, the address is the address of the RG) and the source port number in the IKEv2 signaling sent by the UE and received by the ePDG (i.e. an IPSec UDP source port number).

For the convenience of the description, the IP address of the UE after going through the NAT is also called as the local IP address. Therefore, the outer IP packet header information at least includes the local IP address of the UE. If the NA(P)T is detected between the UE and the ePDG, the outer IP packet header information also may include the IPSec UDP source port number. The outer IP packet header information also can include information such as the address of the ePDG, an IPSec UDP target port number (with respect to the uplink direction of the UE) and protocol types and so on.

Certainly, during the specific implementation, the outer IP packet header information can be a packet filter, and the packet filter at least contains the local IP address of the UE. If the NA(P)T is detected between the UE and the ePDG, the packet filter also may contain the IPSec UDP source port number. The packet filter also can contain information such as the address of the ePDG, the IPSec UDP target port number (with respect to the uplink direction of the UE) and protocol types and so on.

In step 803, the PCRF returns acknowledgement message to the ePDG.

In step 804, after selecting the P-GW, the ePDG sends proxy binding update message to the P-GW, and a user identifier, a PDN identifier and the outer IP packet header information are carried in the proxy binding update message.

In step 805, the P-GW allocates an IP address to the UE, and a PCEF located in the P-GW sends IP-CAN session establishment indication message to the PCRF, and the user identifier, the PDN identifier and the IP address allocated to the UE are carried in the IP-CAN session establishment indication message.

In step 806, the PCRF makes a judgment according to the user identifier and PDN identifier, and if no relevant user subscription data exists, an H-PCRF will interact with an SPR to acquire subscription information. The PCRF makes PCC rules according to the subscription data, network policies and access network attributes and so on. The PCRF returns acknowledgement message including the PCC rules to the PCEF.

In step 807, the P-GW sends P-GW IP address update message to the AAA Server and sends an address of the P-GW to the AAA Server, and the AAA Server further interacts with the HSS and saves the address of the P-GW in the HSS.

In step 808, the P-GW returns proxy binding acknowledgement message to the ePDG, and the IP address allocated to the UE is carried in the proxy binding acknowledgement message.

In step 809, the proxy binding update is successful, and the IPSec tunnel is established between the UE and ePDG.

In step 810, the ePDG sends a final IKEv2 signaling to the UE, wherein the IP address of the UE is included.

In step 811, the PCRF determines a BPCF of the BBF access network which the UE accesses currently according to the outer IP packet header information, and sends the gateway control session establishment message initiated by the PCRF to the BPCF, and the outer IP packet header information is included in the gateway control session establishment message.

The step 811 also can be executed after step 802.

In step 812, the BPCF provides outer IP packet headers to a BBF access network entity (e.g. BNG/BRAS).

In step 813, the BBF access network entity returns acknowledgement message after saving the outer IP packet headers.

In step 814, the BPCF returns acknowledgement message to the PCRF.

Through the above flow, a session is established between the PCRF and BPCF, and the BBF access network (BNG/BRAS) obtains the outer IP packet header information. If the UE requires the network to allocate resources to the UE when the UE performs service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of an IP packet of downlink data of a corresponding data flow (called as an internal packet header) according to the PCC rule, when the IP packets of the service data flow reach the ePDG, the ePDG will perform IPSec encapsulation on the IP packet and perform DSCP replication. When these data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). With regard to uplink data of the service data flows, the UE performs IPSec encapsulation and performs DSCP replication, when the data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control.

The example is also applied to roaming scenarios (including a home routing roaming scenario or a local breakout roaming scenario).

With regard to a scenario of adopting a GTP protocol between the ePDG and P-GW, the flow is similar. The ePDG will carry the outer IP packet header information in session establishment request message.

With regard to a scenario of the UE accessing the 3GPP core network through a trusted BBF access network and the UE using a DSMIPv6 access,
(1) when an IPSec tunnel is established between the UE and P-GW to encapsulate user plane data, the P-GW sends the outer IP packet header information (i.e. the outer IP packet header information of the IPSec tunnel) to the PCRF, the PCRF sends the outer IP packet header information to the BPCF, and then the BPCF sends the outer IP packet header information to the BBF access network entity. The BBF access network entity performs matching on data packets according to the outer IP packet header information and further executes data packet scheduling according to the DSCPs. The relevant flows and ideas are similar to the above example, which will not be repeated. Wherein, the above outer IP packet header information at least contains the local IP address of the UE. If the NA(P)T is detected between the UE and the ePDG, the IPSec UDP source port number (with respect to the uplink direction of the UE) also may be contained. Certainly, information such as an address of the P-GW, an IPSec UDP target port number (with respect to the uplink direction of the UE) and protocol types, etc. also can be included.
(2) when the IPSec tunnel is not adopted between the UE and P-GW to encapsulate the user plane data, the P-GW sends outer IP packet header information (i.e. outer IP packet header information of a DSMIPv6 tunnel) to the PCRF, the PCRF sends the outer IP packet header information to the BPCF, and then the BPCF sends the outer IP packet header information to the BBF access network entity. The BBF access network entity performs matching on the data packets according to the outer IP packet header information and further executes data packet scheduling according to the DSCPs. The relevant flows and ideas are similar to the above example, which will not be repeated. Wherein, the above outer IP packet header information at least contains the local IP address of the UE. If the NA(P)T is detected between the UE and the ePDG, a UDP source port number of a DSMIPv6 binding update signaling (with respect to the uplink direction of the UE, the port number is a UDP port number allocated by the NAPT when the binding update signaling traverses the NAPT when the UE performs binding update) also may be contained. Certainly, information such as an address of the P-GW, a UDP target port number of the DSMIPv6 binding update signaling (with respect to the uplink direction of the UE) and protocol types, etc. also can be included.

Similarly, with regard to a scenario of the UE accessing the 3GPP core network through the untrusted BBF access network and the UE using the DSMIPv6 access,
(1) when an IPSec tunnel is established between the UE and ePDG, all service data flows between the UE and P-GW will be encapsulated with the IPSec tunnel. The ePDG sends the outer IP packet header information (i.e. the outer IP packet header information of the IPSec tunnel) to the PCRF, the PCRF sends the outer IP packet header information to the BPCF, and then the BPCF sends the outer IP packet header information to the BBF access network entity. The BBF access network entity performs matching on data packets according to the outer IP packet header information and further executes data packet scheduling according to the DSCPs. The relevant flows and ideas are similar to the above example, which will not be repeated. Wherein, the above outer IP packet header information at least contains the local IP address of the UE. If the NA(P)T is detected between the UE and the ePDG, the IPSec UDP source port number (with respect to the uplink direction of the UE) also can be contained. Information such as an address of the ePDG, an IPSec UDP target port number (with respect to the uplink direction of the UE) and protocol types, etc. also can be included.

With respect to the outer IP packet header information in the above DSMIPv6 scenarios, it also can be implemented in a form of the packet filter.

### Example 4

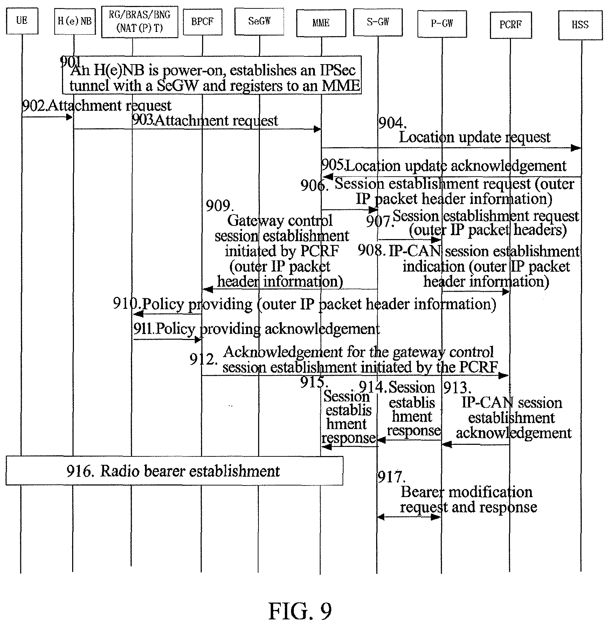

FIG. 9 is a flow of a BBF access network entity obtaining outer IP packet headers during the process of a UE attaching to an EPS under the architecture shown in FIG. 3.

In step 901, after an HeNB is power-on, it obtains a Customer Premises Equipment (CPE) IP address (i.e. a local IP address) allocated by a BBF access network, and the HeNB uses the CPE IP address to perform IKEv2 signaling interaction with a SeGW and establishes an IPSec tunnel. In this process, the SeGW allocates an HeNB IP address to the HeNB, which is used for the HeNB interacting with other 3GPP network elements; and the SeGW obtains outer IP packet header information. With regard to an HeNB scenario, all service data flows of the HeNB will be encapsulated with the IPSec tunnel between the HeNB and SeGW. Therefore, at the point, the outer IP packet header information can be outer IP packet header information of the IPSec tunnel established between the HeNB and SeGW. In order to uniquely identify this IPSec tunnel, the outer IP packet header information of the IPSec tunnel at least includes a source address in an IKEv2 signaling sent by the HeNB and received by the SeGW (i.e. an IPSec source address, with respect to an uplink direction of the HeNB). The outer IP packet header information of the IPSec tunnel also may include a source port number in the IKEv2 signaling sent by the HeNB and received by the SeGW (i.e. an IPSec source port number, with respect to the uplink direction of the HeNB), an address of the SeGW, a UDP receiving port number of the SeGW (i.e. a UDP target port number, with respect to the uplink direction of the HeNB) and protocol types and so on.

Since the IKEv2 signaling may have gone through the NAT traversal, the source address and source port number received by the SeGW may be different from the source address and source port number when the HeNB performs sending. If the IKEv2 signaling does not go through the NA(P)T traversal, the source address is the local IP address obtained when the HeNB accesses the BBF access network.

With regard to a scenario of no NAT existing between the HeNB and SeGW, the source address in the IKEv2 signaling sent by the HeNB and received by the SeGW is the local IP address allocated by the BBF access network, and the address can uniquely identify the service data flows of the HeNB encapsulated with the IPSec tunnel, thus the outer IP packet header information at least contains the local IP address.

With regard to a scenario of (1:1) NAT existing between the HeNB and SeGW, the source address in the IKEv2 signaling sent by the HeNB and received by the SeGW is a public network IP address after going through the NAT, but due to the 1:1 NAT, the address still can uniquely identify the service data flows of the HeNB encapsulated with the IPSec tunnel, thus the outer IP packet header information at least contains the source address in the IKEv2 signaling sent by the HeNB and received by the SeGW (i.e. the public network IP address after going through the NAT of the BBF access network, if the NAT is in an RG, the address is an address of the RG).

With regard to (N:1) NAT (i.e. NAPT) between the HeNB and SeGW, UDP encapsulation needs to be performed on the service data flows during the NAPT traversal, and the NAPT will allocate a UDP source port number (with respect to the uplink direction of the HeNB) to the IPSec tunnel. Therefore, in order to uniquely identify the service data flows of the UE encapsulated with the IPSec tunnel, the outer IP packet header information at least contains the source address in the IKEv2 signaling sent by the HeNB and received by the SeGW (i.e. the public network IP address after going through the NAT of the BBF access network, if the NAT is in the RG, the address is an address of the RG) and the source port number in the IKEv2 signaling sent by the HeNB and received by the SeGW (i.e. an IPSec UDP source port number).

For the convenience of descriptions, the IP address of the HeNB after going through the NAT is also called as the local IP address. Therefore, the outer IP packet header information at least includes the local IP address of the HeNB. If the NA(P)T is detected between the HeNB and SeGW, the outer IP packet header information also may include the IPSec UDP source port number. The outer IP packet header information also can include information such as the address of the SeGW, an IPSec UDP target port number (with respect to the uplink direction of the HeNB) and protocol types and so on.

Certainly, during the specific implementation, the outer IP packet header information can be a packet filter, and the packet filter at least contains the local IP address of the HeNB. If the NA(P)T is detected between the HeNB and SeGW, the packet filter also may contain the IPSec UDP source port number. The packet filter also can contain information such as the address of the SeGW, the IPSec UDP target port number (with respect to the uplink direction of the HeNB) and protocol types and so on.

In step 902, the UE sends attachment request message including a user identifier to the HeNB.

In step 903, the HeNB sends the attachment request message including the user identifier to an MME. When the message passes through the SeGW, the SeGW adds the outer IP packet header information obtained in step 901 into the message to be carried to the MME.

In step 904, the MME sends a location update request including the user identifier to an HSS.

In step 905, the HSS returns a location update response to the MME to return user subscription information.

In step 906, the MME sends a session establishment request including the user identifier, a PDN identifier and the outer IP packet header information to an S-GW.

In step 907, the S-GW sends the session establishment request including the user identifier, the PDN identifier and the outer IP packet header information to a P-GW.

In step 908, the P-GW sends an IP-CAN session establishment indication including the user identifier, the PDN identifier and the outer IP packet header information to a PCRF.

In step 909, the PCRF determines a BPCF of the BBF access network which the UE accesses currently according to the outer IP packet headers, and sends gateway control session establishment message initiated by the PCRF to the BPCF, and the outer IP packet header information is included in the gateway control session establishment message.

In step 910, the BPCF provides the outer IP packet header information to a BBF access network entity (e.g. BNG/BRAS).

In step 911, the BBF access network entity returns acknowledgement message to the BPCF after saving the outer IP packet header information.

In step 912, the BPCF returns response message to the PCRF.

In step 913, the PCRF returns an IP-CAN session establishment acknowledgement to a PCEF.

In step 914, the gateway P-GW in which the PCEF is located sends a session establishment response to the S-GW.

In step 915, the S-GW returns the session establishment response to the MME.

In step 916, an interaction is performed between the MME, HeNB and UE to establish a radio bearer.

In step 917, the MME interacts with the S-GW to update the bearer.

Through the above flow, a session is established between the PCRF and BPCF, and the BBF access network (BNG/BRAS) obtains the outer IP packet header information. If the UE requires the network to allocate resources to the UE when the UE performs service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of an IP packet of downlink data of a corresponding data flow (called as an internal packet header) according to the PCC rule, when the IP packets of the service data flow reach the SeGW, the SeGW will perform IPSec encapsulation on the IP packet and perform DSCP replication. When these data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). With regard to uplink data of the service data flows, the HeNB performs IPSec encapsulation and performs DSCP replication, when the data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control.

With regard to a process of an HNB accessing a UMTS system through attachment, the flow of the BBF access network entity obtaining the outer IP packet header information is similar to this. At the point, the outer IP packet header information can be outer IP packet header information of an IPSec tunnel established between the HNB and SeGW. In order to uniquely identify this IPSec tunnel, the outer IP packet header information of the IPSec tunnel at least includes a source address in an IKEv2 signaling sent by the HNB and received by the SeGW (i.e. an IPSec source address, with respect to the uplink direction of the HNB). The outer IP packet header information of the IPSec tunnel also may include a source port number in the IKEv2 signaling sent by the HNB and received by the SeGW (i.e. an IPSec source port number, with respect to the uplink direction of the HNB) if the NA(P)T is detected between the HNB and SeGW. Certainly, an address of the SeGW, a UDP receiving port number of the SeGW (i.e. a UDP target port number, with respect to the uplink direction of the HNB) and protocol types, etc. also may be contained. Similarly, the outer IP packet header information also can be implemented in a form of the packet filter.

In other examples, in step 901, the SeGW sends the outer IP packet header information to the HeNB, in step 902, the HeNB sends the outer IP packet header information to the MME, and other steps are unchanged.

### Example 5

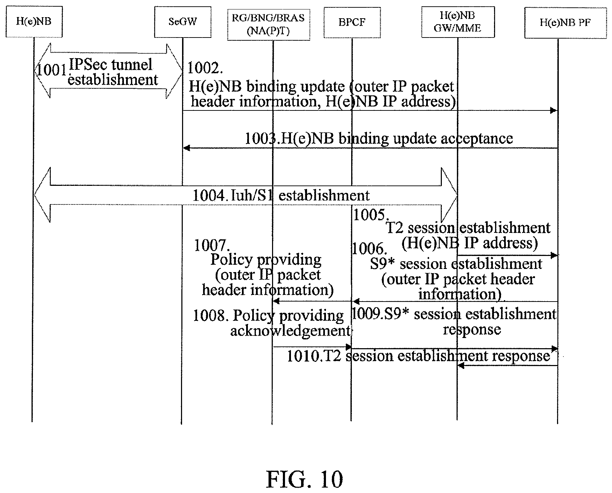

FIG. 10 is a flow of a BBF access network entity obtaining outer IP packet headers after an H(e)NB is power-on under the architecture of FIG. 4.

In step 1001, after the H(e)NB is power-on, it obtains a CPE IP address (i.e. a local IP address) allocated by a BBF access network, and the H(e)NB uses the CPE IP address to perform IKEv2 signaling interaction with a SeGW and establishes an IPSec tunnel. In this process, the SeGW allocates an H(e)NB IP address to the H(e)NB which is used for the H(e)NB interacting with other 3GPP network elements.

In step 1002, the SeGW informs an H(e)NB PF of an association relationship between the CPE IP address and H(e)NB IP address, wherein outer IP packet header information is carried. With regard to an H(e)NB scenario, all service data flows of the H(e)NB will be encapsulated with the IPSec tunnel between the H(e)NB and SeGW. Therefore, at the point, the outer IP packet header information can be outer IP packet header information of the IPSec tunnel established between the H(e)NB and SeGW. In order to uniquely identify this IPSec tunnel, the outer IP packet header information of the IPSec tunnel at least includes a source address in an IKEv2 signaling sent by the H(e)NB and received by the SeGW (i.e. an IPSec source address, with respect to an uplink direction of the H(e)NB). The outer IP packet header information of the IPSec tunnel also may include a source port number in the IKEv2 signaling sent by the H(e)NB and received by the SeGW (i.e. an IPSec source port number, with respect to the uplink direction of the H(e)NB), an address of the SeGW, a UDP receiving port number of the SeGW (i.e. a UDP target port number, with respect to the uplink direction of the H(e)NB) and protocol types and so on.

Since the IKEv2 signaling may have gone through the NA(P)T traversal, the source address and source port number received by the SeGW may be different from the source address and source port number when the H(e)NB performs sending. If the IKEv2 signaling does not go through the NAT traversal, the source address is the CPE IP address obtained when the H(e)NB accesses the BBF access network.

With regard to a scenario of no NAT existing between the H(e)NB and SeGW, the source address in the IKEv2 signaling sent by the H(e)NB and received by the SeGW is the local IP address allocated by the BBF access network, and the address can uniquely identify the service data flows of the H(e)NB encapsulated with the IPSec tunnel, thus the outer IP packet header information at least contains the local IP address.

With regard to a scenario of (1:1) NAT existing between the H(e)NB and SeGW, the source address in the IKEv2 signaling sent by the H(e)NB and received by the SeGW is a public network IP address after going through the NAT, but due to the 1:1 NAT, the address still can uniquely identify the service data flows of the H(e)NB encapsulated with the IPSec tunnel, thus the outer IP packet header information at least contains the source address in the IKEv2 signaling sent by the H(e)NB and received by the SeGW (i.e. the public network IP address after going through the NAT of the BBF access network, if the NAT is in an RG, the address is an address of the RG).

With regard to (N:1) NAT (i.e. NAPT) between the H(e)NB and SeGW, UDP encapsulation needs to be performed on the service data flows during the NAPT traversal, and the NAPT will allocate a UDP source port number (with respect to the uplink direction of the H(e)NB) to the IPSec tunnel. Therefore, in order to uniquely identify the service data flows of the UE encapsulated with the IPSec tunnel, the outer IP packet header information at least contains the source address in the IKEv2 signaling sent by the H(e)NB and received by the SeGW (i.e. the public network IP address after going through the NAT of the BBF access network, if the NAT is in the RG, the address is an address of the RG) and the source port number in the IKEv2 signaling sent by the H(e)NB and received by the SeGW (i.e. an IPSec UDP source port number).

For the convenience of the description, the IP address of the H(e)NB after going through the NAT is also called as the local IP address. Therefore, the outer IP packet header information at least includes the local IP address of the H(e)NB. If the NA(P)T is detected between the H(e)NB and SeGW, the outer IP packet header information also may include the IPSec UDP source port number. The outer IP packet header information also can include information such as the address of the SeGW, an IPSec UDP target port number (with respect to the uplink direction of the H(e)NB) and protocol types and so on.

Certainly, during the specific implementation, the outer IP packet header information can be a packet filter, and the packet filter at least contains the local IP address of the H(e)NB. If the NA(P)T is detected between the H(e)NB and SeGW, the packet filter also may contain the IPSec UDP source port number. The packet filter also can contain information such as the address of the SeGW, the IPSec UDP target port number (with respect to the uplink direction of the H(e)NB) and protocol types and so on.

In step 1003, the H(e)NB PF returns acceptance message after saving the association relationship.

In step 1004, an S1 connection or an Iuh connection is established between the H(e)NB and an H(e)NB GW or between the H(e)NB and an MME.

In step 1005, a T2 session is established between the H(e)NB GW and H(e)NB PF or between the MME and H(e)NB PF, wherein a CSG ID and the H(e)NB IP address are carried.

In step 1006, H(e)NB PF associates the T2 session with the step 1002 according to the H(e)NB IP address, thereby obtaining the CPE IP address of the H(e)NB, and the H(e)NB PF determines a BPCF of the BBF access network which the H(e)NB accesses according to the CPE IP address. The H(e)NB PF establishes an S9* session to the BPCF, wherein the CPE IP address and the outer IP packet header information are carried.

In step 1007, the BPCF provides the outer IP packet header information to a BBF access network entity (e.g. BNG/BRAS).

In step 1008, the BBF access network entity returns acknowledgement message to the BPCF after saving the outer IP packet header information.

In step 1009, the BPCF returns response message to the H(e)NB PF.

In step 1010, the H(e)NB PF returns the response message to the H(e)NB GW or MME.

Through the above flow, a session is established between the H(e)NB PF and BPCF, and the BBF access network (BNG/BRAS) obtains the outer IP packet header information. If the UE requires the network to allocate resources to the UE when the UE performs service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of an IP packet of downlink data of a corresponding data flow (called as an internal packet header) according to the PCC rule, when the IP packets of the service data flow reach the SeGW, the SeGW will perform IPSec encapsulation on the IP packet and perform DSCP replication. When these data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). With regard to uplink data of the service data flows, the H(e)NB performs IPSec encapsulation and performs DSCP replication, when the data reach the BBF access network, the BBF access network entity firstly performs filtering according to the saved outer IP packet headers, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control.

In other examples, if an interface between the SeGW and H(e)NB PF does not exist, in step 1001, the SeGW sends the outer IP packet header information to the H(e)NB, step 1002 and step 1003 are not executed, in step 1004, the H(e)NB sends the outer IP packet header information to the H(e)NB PF, and other steps are unchanged.

### Example 6

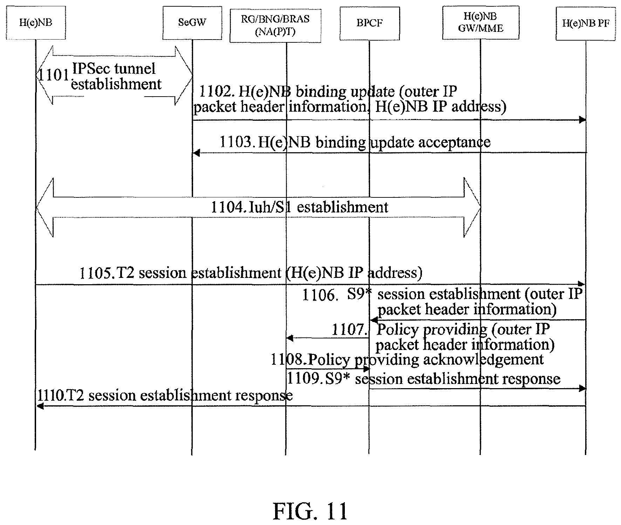

FIG. 11 is a flow of a BBF access network entity obtaining outer IP packet headers after an H(e)NB is power-on under the architecture of FIG. 5.

In step 1101, after the H(e)NB is power-on, it obtains a Customer Premises Equipment (CPE) IP address (i.e. a local IP address) allocated by a BBF access network, and the H(e)NB uses the CPE IP address to perform IKEv2 signaling interaction with a SeGW and establishes an IPSec tunnel. In this process, the SeGW allocates an H(e)NB IP address to the H(e)NB which is used for the H(e)NB interacting with other 3GPP network elements.

In step 1102, the SeGW informs an H(e)NB PF of an association relationship between the CPE IP address and H(e)NB IP address, wherein outer IP packet header information is carried. With regard to an H(e)NB scenario, all service data flows of the H(e)NB will be encapsulated with the IPSec tunnel between the H(e)NB and SeGW. Therefore, at the point, the outer IP packet header information can be outer IP packet header information of the IPSec tunnel established between the H(e)NB and SeGW. In order to uniquely identify this IPSec tunnel, the outer IP packet header information of the IPSec tunnel at least includes a source address in an IKEv2 signaling sent by the H(e)NB and received by the SeGW (i.e. an IPSec source address, with respect to an uplink direction of the H(e)NB). The outer IP packet header information of the IPSec tunnel also may include a source port number in the IKEv2 signaling sent by the H(e)NB and received by the SeGW (i.e. an IPSec source port number, with respect to the uplink direction of the H(e)NB), an address of the SeGW, a UDP receiving port number of the SeGW (i.e. a UDP target port number, with respect to the uplink direction of the H(e)NB) and protocol types and so on.

Since the IKEv2 signaling may have gone through the NAT traversal, the source address and source port number received by the SeGW may be different from the source address and source port number when the UE performs sending. If the IKEv2 signaling does not go through the NAT traversal, the source address is a CPE IP address obtained when the UE accesses the BBF access network.

With regard to a scenario of no NAT existing between the H(e)NB and SeGW, the source address in the IKEv2 signaling sent by the H(e)NB and received by the SeGW is the local IP address allocated by the BBF access network, and the address can uniquely identify the service data flows of the H(e)NB encapsulated with the IPSec tunnel, thus the outer IP packet header information at least contains the local IP address.

With regard to a scenario of (1:1) NAT existing between the H(e)NB and SeGW, the source address in the IKEv2 signaling sent by the H(e)NB and received by the SeGW is a public network IP address after going through the NAT, but due to the 1:1 NAT, the address still can uniquely identify the service data flows of the H(e)NB encapsulated with the IPSec tunnel, thus the outer IP packet header information at least contains the source address in the IKEv2 signaling sent by the H(e)NB and received by the SeGW (i.e. the public network IP address after going through the NAT of the BBF access network, if the NAT is in an RG, the address is an address of the RG).

With regard to (N:1) NAT (i.e. NAPT) between the H(e)NB and SeGW, UDP encapsulation needs to be performed on the service data flows during the NAPT traversal, and the NAPT will allocate a UDP source port number (with respect to the uplink direction of the H(e)NB) to the IPSec tunnel. Therefore, in order to uniquely identify the service data flows of the UE encapsulated with the IPSec tunnel, the outer IP packet header information at least contains the source address in the IKEv2 signaling sent by the H(e)NB and received by the SeGW (i.e. the public network IP address after going through the NAT of the BBF access network, if the NAT is in the RG, the address is an address of the RG) and the source port number in the IKEv2 signaling sent by the H(e)NB and received by the SeGW (i.e. an IPSec UDP source port number).

For the convenience of the description, the IP address of the H(e)NB after going through the NAT is also called as the local IP address. Therefore, the outer IP packet header information at least includes the local IP address of the H(e)NB. If the NA(P)T is detected between the H(e)NB and SeGW, the outer IP packet header information also may include the IPSec UDP source port number. The outer IP packet header information also can include information such as the address of the SeGW, an IPSec UDP target port number (with respect to the uplink direction of the H(e)NB) and protocol types and so on.

Certainly, during the specific implementation, the outer IP packet header information can be a packet filter, and the packet filter at least contains the local IP address of the H(e)NB. If the NA(P)T is detected between the H(e)NB and SeGW, the packet filter also may contain the IPSec UDP source port number. The packet filter also can contain information such as the address of the SeGW, the IPSec UDP target port number (with respect to the uplink direction of the H(e)NB) and protocol types and so on.

In step 1103, the H(e)NB PF returns acceptance message after saving the association relationship.

In step 1104, an S1 connection or an Iuh connection is established between the H(e)NB and an H(e)NB GW or between the H(e)NB and an MME.

In step 1105, a T2 session is established between the H(e)NB and H(e)NB PF, wherein a CSG ID and the H(e)NB IP address are carried.

In step 1106, H(e)NB PF associates the T2 session with the step 1102 according to the H(e)NB IP address, thereby obtaining the CPE IP address of the H(e)NB, and the H(e)NB PF determines a BPCF of the BBF access network which the H(e)NB accesses according to the CPE IP address. The H(e)NB PF establishes an S9* session to the BPCF, wherein the CPE IP address and the outer IP packet header information are carried.

In step 1107, the BPCF provides the outer IP packet header information to a BBF access network entity (e.g. BNG/BRAS).

In step 1108, the BBF access network entity returns acknowledgement message to the BPCF after saving the outer IP packet header information.

In step 1109, the BPCF returns response message to the H(e)NB PF.

In step 1110, the H(e)NB PF returns the response message to the H(e)NB.

Through the above flow, a session is established between the H(e)NB PF and BPCF, and the BBF access network (BNG/BRAS) obtains the outer IP packet header information. If the UE requires the network to allocate resources to the UE when the UE performs service access, the PCRF firstly sends QoS information of the made PCC rules to the BPCF, so that the BBF access network executes the admission control. Then, the PCRF sends a PCC rule accepted by the BBF access network to the PCEF. The PCEF performs DSCP marking on a header of an IP packet of downlink data of a corresponding data flow (called as an internal packet header) according to the PCC rule, when the IP packets of the service data flow reach the SeGW, the SeGW will perform IPSec encapsulation on the IP packet and perform DSCP replication. When these data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). With regard to uplink data of the service data flows, the UE performs IPSec encapsulation and performs DSCP replication, when the data reach the BBF access network, the BBF access network entity firstly performs filtering according to the saved outer IP packet header information, and only when service data flows of the outer IP packet header information are matched, it performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control.

In other examples, if an interface between the SeGW and H(e)NB PF does not exist, in step 1101, the SeGW sends the outer IP packet header information to the H(e)NB, step 1102 and step 1103 are not executed, in step 1104, the H(e)NB sends the outer IP packet header information to the H(e)NB PF, and other steps are unchanged.

With regard to all the above examples, when the BBF access network entity performs matching on IP packets according to the outer IP packet header information, if no IP packet is matched, only when a network congestion occurs, it performs data scheduling according to the local policies, and if resources are still sufficient currently, it still performs dispatching according to the DSCPs.

The methods which are applicable to the convergence scenario where there is a direct interface between the PCRF and the BNG/BRAS while the BPCF does not occur are similar with the above methods. Only exception is that the outer IP packet header information is sent by the PCRF to the BNG/BRAS directly without going through the BPCF.

The present document also provides a policy control system, which includes: a 3GPP network entity and a Broadband Forum (BBF) access network entity, wherein:
the 3GPP network entity is configured to: send outer IP packet header information to the BBF access network entity;
the BBF access network entity is configured to: schedule a data packet matching the outer IP packet header information according to a Differentiated Services Code Point (DSCP) of the data packet.
Wherein, the BBF access network entity is further configured to: schedule a data packet mismatching the outer IP packet header information according to a local policy.

Wherein, the system also includes a Broadband Policy Control Framework (BPCF), and the 3GPP network entity includes an Evolved Packet Data Gateway (ePDG) and a Policy and Charging Rules Function (PCRF), wherein:
the ePDG is configured to send the outer IP packet header information to a Packet Data Network Gateway (P-GW), and the P-GW sends the outer IP packet header information to the Policy and Charging Rules Function (PCRF); or the ePDG directly sends the outer IP packet header information to the PCRF.
the PCRF is configured to: send the outer IP packet header information to the BPCF;
the BPCF is configured to: send the outer IP packet header information to the BBF access network entity.

Or, the 3GPP network entity includes a P-GW and a PCRF:
the P-GW is configured to: send the outer IP packet header information to the PCRF;
the PCRF is configured to: send the outer IP packet header information to the BPCF or the BBF access network entity;
the BPCF is configured to: send the outer IP packet header information to the BBF access network entity.

The PCRF is configured to send the outer IP packet header information to the BPCF or the BBF access network entity by the following way: when performing quality of service authorization, sending the outer IP packet header information to the BPCF or the BBF access network entity; or, when initiating a policy interconnection session establishment to the BPCF or the BBF access network entity, sending the outer IP packet header information to the BPCF or the BBF access network entity.

Wherein, the system also includes a Broadband Policy Control Framework (BPCF), and the 3GPP network entity includes a security gateway and an H(e)NB policy function, or includes a security gateway and a PCRF, wherein:
the security gateway is configured to: send the outer IP packet header information to the H(e)NB policy function;
the H(e)NB policy function is configured to: send the outer IP packet header information to the BPCF;
the BPCF is configured to: send the outer IP packet header information to the BBF access network entity.

Or,
the security gateway is configured to: send the outer IP packet header information to the PCRF;
the PCRF is configured to: send the outer IP packet header information to the BPCF or the BBF access network entity;
the BPCF is configured to: send the outer IP packet header information to the BBF access network entity.

Wherein, the H(e)NB policy function or the PCRF is configured to send the outer IP packet header information to the BPCF or the BBF access network entity by the following way: when initiating a policy interconnection session establishment to the BPCF or the BBF access network entity, sending the outer IP packet header information to the BPCF or the BBF access network entity.

Wherein, the outer IP packet header information is outer IP packet header information of an IPSec tunnel. The IPSec tunnel is an IPSec tunnel between the user equipment and ePDG, or between the user equipment and P-GW, or between the H(e)NB and security gateway.

The above description is only the preferred examples of the present document, which is not used to limit the protection scope of the present document. All the modifications, equivalent substitutions, and improvements, etc. made within the principle of the present document shall fall into the protection scope of the present document.

### Industrial Applicability

In the above technical scheme, the BBF access network saves outer IP packet headers, when the data reach the BBF access network, the BBF access network entity firstly performs filtering according to the saved outer IP packet headers, and only when service data flows of the outer IP packet headers are matched, it performs data scheduling according to DSCPs; with regard to the mismatched service data flows, the BBF access network entity performs processing according to the local policies (e.g., DSCPs with lower priorities are remarked). Thus, those service data flows without going through the admission control will not occupy resources of other service data flows going through the admission control. Therefore, the present document has an extremely strong industrial applicability.

## Claims

1. A policy control method, **characterized by**, comprising:
a Broadband Forum ,BBF, access network entity receiving and saving outer Internet Protocol, IP packet header information sent by a 3rd Generation Partnership Project ,3GPP, network entity; wherein said outer IP packet header is a header of an IP packet of Internet Protocol Security, IPSec, or is a header of a Mobile IPv6 support for dual stack Hosts and Routers DSMIPv6 tunnel;
the BBF access network entity performing filtering according to the received outer IP packet header information when data reach the BBF access network;
the BBF access network entity scheduling a data packet according to a Differentiated Services Code Point ,DSCP, of the data packet when an outer IP packet header information of the data packet match the outer IP packet header information received by the BBF access network entity, and the BBF access network entity scheduling the data packet which is mismatching the outer IP packet header information received and saved by the BBF access network entity according to a policy of the BBF access network entity.

2. The policy control method according to claim 1, wherein, the step of a BBF access network entity receiving outer IP packet header information sent by a 3GPP network entity comprises:
an Evolved Packet Data Gateway, ePDG, of a 3GPP network sending the outer IP packet header information to a Policy and Charging Rules Function ,PCRF, through a Packet Data Network Gateway ,P-GW, the PCRF sending the outer IP packet header information to a Broadband Policy Control Framework ,BPCF, of a BBF access network, and the BPCF sending the outer IP packet header information to the BBF access network entity; or,
the ePDG directly sending the outer IP packet header information to the PCRF, the PCRF sending the outer IP packet header information to the BPCF, and the BPCF sending the outer IP packet header information to the BBF access network entity; or,
the P-GW sending the outer IP packet header information to the PCRF, the PCRF sending the outer IP packet header information to the BPCF, and the BPCF sending the outer IP packet header information to the BBF access network entity; or
the ePDG sending the outer IP packet header information to the PCRF through the P-GW, the PCRF sending the outer IP packet header information to the BBF access network entity; or,
the ePDG directly sending the outer IP packet header information to the PCRF, the PCRF sending the outer IP packet header information to the BBF access network entity; or,
the P-GW sending the outer IP packet header information to the PCRF, the PCRF sending the outer IP packet header information to the BBF access network entity.

3. The policy control method according to claim 1, wherein, the step of a BBF access network entity receiving outer IP packet header information sent by a 3GPP network entity comprises:
a Security Gateway, SeGW, of the 3GPP network sending the outer IP packet header information to an H(e)NB Policy Function ,H(e)NB PF, of the BBF access network, the H(e)NB PF sending the outer IP packet header information to the BPCF, and the BPCF sending the outer IP packet header information to the BBF access network entity; or,
the SeGW sending the outer IP packet header information to the PCRF, the PCRF sending the outer IP packet header information to the BPCF, and the BPCF sending the outer IP packet header information to the BBF access network entity; or
the SeGW of the 3GPP network sending the outer IP packet header information to the H(e)NB PF, the H(e)NB PF sending the outer IP packet header information to the BBF access network entity; or,
the SeGW sending the outer IP packet header information to the PCRF, the PCRF sending the outer IP packet header information to the BBF access network entity.

4. The policy control method according to claim 3, wherein, the step of the H(e)NB PF sending the outer IP packet header information to the BPCF comprises:
when initiating a policy interconnection session establishment to the BPCF, the H(e)NB PF sending the outer IP packet header information to the BPCF;
the step of the PCRF sending the outer IP packet header information to the BPCF comprises:
when initiating the policy interconnection session establishment to the BPCF, the PCRF sending the outer IP packet header information to the BPCF.

5. The policy control method according to any one of claims 1 or 2, wherein, the outer IP packet header information at least comprises an IP address of a User Equipment ,UE, attained from the BBF access network entity;
or,
wherein, the outer IP packet header information comprises an IP address of ePDG or P-GW and an IP address of a User Equipment ,UE, attained from the BBF access network entity;
or,
wherein, if an NA(P)T is detected between the UE and the ePDG or between the UE and the P-GW, the outer IP packet header information comprises a User Datagram Protocol ,UDP, source port number and the IP address of the UE attained from the BBF access network entity,
wherein, the UDP source port number is an IPSec UDP source port number or a UDP source port number of a DSMIP binding update signaling.

6. The policy control method according to claim 1, 3 or 4, wherein, the outer IP packet header information at least comprises an IP address of an H(e)NB attained from the BBF access network entity,
or,
wherein, if an NA(P)T is detected between the H(e)NB and the SeGW, the outer IP packet header information comprises a UDP source port number and the IP address of the H(e)NB attained from the BBF access network entity,
wherein, the UDP source port number is an IPSec UDP source port number.

7. The policy control method according to claim 5 or 6, wherein, the outer IP packet header information is a packet filter containing corresponding information.

8. A policy control system, **characterized by**, comprising:
a 3GPP network entity and a Broadband Forum ,BBF, access network entity, wherein:
the 3GPP network entity is configured to send outer IP packet header information to the BBF access network entity; wherein said outer IP packet header is a header of an IP packet of IPSec ,Internet Protocol Security, or is a header of a Mobile IPv6 support for dual stack Hosts and Routers DSMIPv6 tunnel;
the BBF access network entity is configured to perform filtering according to the received outer IP packet header information when data reach the BBF access network;
the BBF access network entity is configured to schedule a data packet according to a Differentiated Services Code Point ,DSCP, of the data packet when an outer IP packet header information of the data packet match the outer IP packet header information received and saved by the BBF access network entity, and the BBF access network entity schedules the data packet which is mismatching the outer IP packet header information received and saved by the BBF access network entity according to a policy of the BBF access network entity.

9. The policy control system according to any one of claims 8, wherein, the outer IP packet header information at least comprises an IP address of a User Equipment ,UE, or an IP address of an H(e)NB attained from the BBF access network entity,
or,
in a case that the outer IP packet header information comprises an IP address of a User Equipment ,UE, attained from the BBF access network entity and, wherein the outer IP packet header information comprises an IP address of ePDG or P-GW,
or,
wherein if an NA(P)T is detected between the UE and the ePDG or between the UE and the P-GW, the outer IP packet header information comprises a UDP source port number and the IP address of the UE attained from the BBF access network entity,
wherein, the UDP source port number is an IPSec UDP source port number or a UDP source port number of a DSMIP binding update signaling,
in a case that the outer IP packet header information at least comprises an IP address of an H(e)NB attained from the BBF access network entity, and, wherein, if an NA(P)T is detected between the H(e)NB and the SeGW, the outer IP packet header information comprises a UDP source port number,
wherein, the UDP source port number is an IPSec UDP source port number.

10. The policy control system according to claim 9, wherein, the outer IP packet header information is a packet filter containing corresponding information.

11. A Broadband Forum ,BBF, access network system, **characterized by**, comprising a BBF access network entity, wherein:
the BBF access network entity is configured to: receive and save outer IP packet header information sent by a 3rd Generation Partnership Project, 3GPP network, wherein said outer IP packet header is a header of an IP packet of Internet Protocol Security, IPSec or is a header of a Mobile IPv6 support for dual stack Hosts and Routers DSMIPv6 tunnel; perform filtering according to the received outer IP packet header information when data reach the BBF access network; and schedule a data packet according to a Differentiated Services Code Point ,DSCP of the data packet when an outer IP packet header information of the data packet match the outer IP packet header information received and saved by the BBF access network entity, and schedules the data packet which is mismatching the outer IP packet header information received and saved by the BBF access network entity according to a policy of the BBF access network entity.

12. The BBF access network system according to claim 11, further comprising: a Broadband Policy Control Framework ,BPCF, wherein:
the BPCF is configured to: after an Evolved Packet Data Gateway ,ePDG, of the 3GPP network sends the outer IP packet header information to a Policy and Charging Rules Function ,PCRF, through a Packet Data Network Gateway ,P-GW, receive the outer IP packet header information sent by the PCRF; or after the ePDG directly sends the outer IP packet header information to the PCRF, receive the outer IP packet header information sent by the PCRF; or after the P-GW sends the outer IP packet header information to the PCRF, receive the outer IP packet header information sent by the PCRF, and send the outer IP packet header information to the BBF access network entity; or,
receive the outer IP packet header information sent by a Security Gateway ,SeGW, of the 3GPP network through an H(e)NB Policy Function ,H(e)NB PF, of a BBF access network; or receive the outer IP packet header information sent by the SeGW through the PCRF, and send the outer IP packet header information to the BBF access network entity.

## Patentansprüche

1. Richtliniensteuerungsverfahren, **dadurch gekennzeichnet, dass** es Folgendes umfasst:
Empfangen und Speichern von durch eine 3rd-Generation-Partnership-Project(3GPP)-Netzkomponente gesendeten Informationen zu äußeren Internetprotokoll(IP)-Paketköpfen durch eine Broadband-Forum(BBF)-Zugangsnetzkomponente; wobei der äußere IP-Paketkopf ein Kopf eines IP-Pakets gemäß Internet Protocol Security, IPSec, oder ein Kopf eines Mobile-IPv6-support-for-dual-stack-Hosts-and-Routers-DSMIPv6-Tunnels ist;
Durchführen einer Filterung durch die BBF-Zugangsnetzkomponente gemäß den empfangenen Informationen zu äußeren IP-Paketköpfen, wenn Daten das BBF-Zugangsnetz erreichen;
Scheduling eines Datenpakets durch die BBF-Zugangsnetzkomponente gemäß einem Differentiated Services Code Point, DSCP, des Datenpakets, wenn Informationen zu äußeren IP-Paketköpfen des Datenpakets zu den durch die BBF-Zugangsnetzkomponente empfangenen Informationen zu äußeren IP-Paketköpfen passen, und Scheduling des Datenpakets, das nicht zu den durch die BBF-Zugangsnetzkomponente empfangenen und gespeicherten Informationen zu äußeren IP-Paketköpfen passt, durch die BBF-Zugangsnetzkomponente gemäß einer Richtlinie der BBF-Zugangsnetzkomponente.

2. Richtliniensteuerungsverfahren nach Anspruch 1, wobei der Schritt, dass eine BBF-Zugangsnetzkomponente durch eine 3GPP-Netzkomponente gesendete Informationen zu äußeren IP-Paketköpfen empfängt, Folgendes umfasst:
Senden der Informationen zu äußeren IP-Paketköpfen durch ein Evolved Packet Data Gateway, ePDG, eines 3GPP-Netzes über ein Packet Data Network Gateway, P-GW, an eine Policy and Charging Rules Function, PCRF, Senden der Informationen zu äußeren IP-Paketköpfen durch die PCRF an ein Broadband Policy Control Framework, BPCF, eines BBF-Zugangsnetzes und Senden der Informationen zu äußeren IP-Paketköpfen durch das BPCF an die BBF-Zugangsnetzkomponente; oder
direktes Senden der Informationen zu äußeren IP-Paketköpfen durch das ePDG an die PCRF, Senden der Informationen zu äußeren IP-Paketköpfen durch die PCRF an das BPCF und Senden der Informationen zu äußeren IP-Paketköpfen durch das BPCF an die BBF-Zugangsnetzkomponente; oder
Senden der Informationen zu äußeren IP-Paketköpfen durch das P-GW an die PCRF, Senden der Informationen zu äußeren IP-Paketköpfen durch die PCRF an das BPCF und Senden der Informationen zu äußeren IP-Paketköpfen durch das BPCF an die BBF-Zugangsnetzkomponente; oder
Senden der Informationen zu äußeren IP-Paketköpfen durch das ePDG über das P-GW an die PCRF, Senden der Informationen zu äußeren IP-Paketköpfen durch die PCRF an die BBF-Zugangsnetzkomponente; oder
direktes Senden der Informationen zu äußeren IP-Paketköpfen durch das ePDG an die PCRF, Senden der Informationen zu äußeren IP-Paketköpfen durch die PCRF an die BBF-Zugangsnetzkomponente; oder
Senden der Informationen zu äußeren IP-Paketköpfen durch das P-GW an die PCRF, Senden der Informationen zu äußeren IP-Paketköpfen durch die PCRF an die BBF-Zugangsnetzkomponente.

3. Richtliniensteuerungsverfahren nach Anspruch 1, wobei der Schritt, dass eine BBF-Zugangsnetzkomponente durch eine 3GPP-Netzkomponente gesendete Informationen zu äußeren IP-Paketköpfen empfängt, Folgendes umfasst:
Senden der Informationen zu äußeren IP-Paketköpfen durch ein Security Gateway, SeGW, des 3GPP-Netzes an eine H(e)NB Policy Function, H(e)NB PF, des BBF-Zugangsnetzes, Senden der Informationen zu äußeren IP-Paketköpfen durch die H(e)NB PF an das BPCF und Senden der Informationen zu äußeren IP-Paketköpfen durch das BPCF an die BBF-Zugangsnetzkomponente; oder
Senden der Informationen zu äußeren IP-Paketköpfen durch das SeGW an die PCRF, Senden der Informationen zu äußeren IP-Paketköpfen durch die PCRF an das BPCF und Senden der Informationen zu äußeren IP-Paketköpfen durch das BPCF an die BBF-Zugangsnetzkomponente; oder
Senden der Informationen zu äußeren IP-Paketköpfen durch das SeGW des 3GPP-Netzes an die H(e)NB PF, Senden der Informationen zu äußeren IP-Paketköpfen durch die H(e)NB PF an die BBF-Zugangsnetzkomponente; oder
Senden der Informationen zu äußeren IP-Paketköpfen durch das SeGW an die PCRF, Senden der Informationen zu äußeren IP-Paketköpfen durch die PCRF an die BBF-Zugangsnetzkomponente.

4. Richtliniensteuerungsverfahren nach Anspruch 3, wobei der Schritt, dass die H(e)NB PF die Informationen zu äußeren IP-Paketköpfen an das BPCF sendet, Folgendes umfasst:
wenn eine Einrichtung einer Richtlinienzusammenschaltungssitzung mit dem BPCF initiiert wird, Senden der Informationen zu äußeren IP-Paketköpfen durch die H(e)NB PF an das BPCF;
wobei der Schritt, dass die PCRF die Informationen zu äußeren IP-Paketköpfen an das BPCF sendet, Folgendes umfasst:
wenn die Einrichtung einer Richtlinienzusammenschaltungssitzung mit dem BPCF initiiert wird, Senden der Informationen zu äußeren IP-Paketköpfen durch die PCRF an das BPCF.

5. Richtliniensteuerungsverfahren nach Anspruch 1 oder 2, wobei die Informationen zu äußeren IP-Paketköpfen mindestens eine von der BBF-Zugangsnetzkomponente erhaltene IP-Adresse eines Benutzerendgeräts, UE, umfassen;
oder
wobei die Informationen zu äußeren IP-Paketköpfen eine IP-Adresse eines ePDG oder eines P-GW und eine IP-Adresse eines Benutzerendgeräts, UE, die von der BBF-Zugangsnetzkomponente erhalten werden, umfassen;
oder
wobei die Informationen zu äußeren IP-Paketköpfen, falls zwischen dem UE und dem ePDG oder zwischen dem UE und dem P-GW eine NA(P)T detektiert wird, eine User-Datagram-Protocol(UDP)-Quellportnummer und die von der BBF-Zugangsnetzkomponente erhaltene IP-Adresse des UE umfassen,
wobei die UDP-Quellportnummer eine IPSec-UDP-Quellportnummer oder eine UDP-Quellportnummer einer DSMIP-Bindungsaktualisierungssignalisierung ist.

6. Richtliniensteuerungsverfahren nach Anspruch 1, 3 oder 4, wobei die Informationen zu äußeren IP-Paketköpfen mindestens eine von der BBF-Zugangsnetzkomponente erhaltene IP-Adresse einer H(e)NB umfassen,
oder
wobei die Informationen zu äußeren IP-Paketköpfen, falls zwischen der H(e)NB und dem SeGW eine NA(P)T detektiert wird, eine UDP-Quellportnummer und die von der BBF-Zugangsnetzkomponente erhaltene IP-Adresse der H(e)NB umfassen,
wobei die UDP-Quellportnummer eine IPSec-UDP-Quellportnummer ist.

7. Richtliniensteuerungsverfahren nach Anspruch 5 oder 6, wobei die Informationen zu äußeren IP-Paketköpfen ein Paketfilter sind, der entsprechende Informationen enthält.

8. Richtliniensteuerungssystem, **dadurch gekennzeichnet, dass** es Folgendes umfasst:
eine 3GPP-Netzkomponente und eine Broadband-Forum(BBF)-Zugangsnetzkomponente, wobei:
die 3GPP-Netzkomponente konfiguriert ist, um Informationen zu äußeren IP-Paketköpfen an die BBF-Zugangsnetzkomponente zu senden; wobei der äußere IP-Paketkopf ein Kopf eines IP-Pakets gemäß IPSec, Internet Protocol Security, oder ein Kopf eines Mobile-IPv6-support-for-dual-stack-Hosts-and-Routers-DSMIPv6-Tunnels ist;
die BBF-Zugangsnetzkomponente konfiguriert ist, um eine Filterung gemäß den empfangenen Informationen zu äußeren IP-Paketköpfen durchzuführen, wenn Daten das BBF-Zugangsnetz erreichen;
die BBF-Zugangsnetzkomponente konfiguriert ist, um ein Datenpaket gemäß einem Differentiated Services Code Point, DSCP, des Datenpakets einem Scheduling zu unterziehen, wenn Informationen zu äußeren IP-Paketköpfen des Datenpakets zu den durch die BBF-Zugangsnetzkomponente empfangenen und gespeicherten Informationen zu äußeren IP-Paketköpfen passen, und die BBF-Zugangsnetzkomponente das Datenpaket, das nicht zu den durch die BBF-Zugangsnetzkomponente empfangenen und gespeicherten Informationen zu äußeren IP-Paketköpfen passt, gemäß einer Richtlinie der BBF-Zugangsnetzkomponente einem Scheduling unterzieht.

9. Richtliniensteuerungssystem nach einem der Ansprüche 8, wobei die Informationen zu äußeren IP-Paketköpfen mindestens eine IP-Adresse eines Benutzerendgeräts, UE, oder eine IP-Adresse einer H(e)NB, die von der BBF-Zugangsnetzkomponente erhalten werden, umfassen,
oder
für den Fall, dass die Informationen zu äußeren IP-Paketköpfen eine von der BBF-Zugangsnetzkomponente erhaltene IP-Adresse eines Benutzerendgeräts, UE, umfassen und wobei die Informationen zu äußeren IP-Paketköpfen eine IP-Adresse eines ePDG oder eines P-GW umfassen,
oder
wobei die Informationen zu äußeren IP-Paketköpfen, falls zwischen dem UE und dem ePDG oder zwischen dem UE und dem P-GW eine NA(P)T detektiert wird, eine UDP-Quellportnummer und die von der BBF-Zugangsnetzkomponente erhaltene IP-Adresse des UE umfassen,
wobei die UDP-Quellportnummer eine IPSec-UDP-Quellportnummer oder eine UDP-Quellportnummer einer DSMIP-Bindungsaktualisierungssignalisierung ist,
für den Fall, dass die Informationen zu äußeren IP-Paketköpfen mindestens eine von der BBF-Zugangsnetzkomponente erhaltene IP-Adresse einer H(e)NB umfassen und wobei die Informationen zu äußeren IP-Paketköpfen, falls zwischen der H(e)NB und dem SeGW eine NA(P)T detektiert wird, eine UDP-Quellportnummer umfassen,
wobei die UDP-Quellportnummer eine IPSec-UDP-Quellportnummer ist.

10. Richtliniensteuerungssystem nach Anspruch 9, wobei die Informationen zu äußeren IP-Paketköpfen ein Paketfilter sind, der entsprechende Informationen enthält.

11. Broadband-Forum(BBF)-Zugangsnetzsystem, **dadurch gekennzeichnet, dass** es eine BBF-Zugangsnetzkomponente umfasst, wobei:
die BBF-Zugangsnetzkomponente konfiguriert ist, um: durch ein 3rd-Generation-Partnership-Project(3GPP)-Netz gesendete Informationen zu äußeren IP-Paketköpfen zu empfangen und zu speichern, wobei der äußere IP-Paketkopf ein Kopf eines IP-Pakets gemäß Internet Protocol Security, IPSec, oder ein Kopf eines Mobile-IPv6-support-for-dual-stack-Hosts-and-Routers-DSMIPv6-Tunnels ist; eine Filterung gemäß den empfangenen Informationen zu äußeren IP-Paketköpfen durchzuführen, wenn Daten das BBF-Zugangsnetz erreichen; und ein Datenpaket gemäß einem Differentiated Services Code Point, DSCP, des Datenpakets einem Scheduling zu unterziehen, wenn Informationen zu äußeren IP-Paketköpfen des Datenpakets zu den durch die BBF-Zugangsnetzkomponente empfangenen und gespeicherten Informationen zu äußeren IP-Paketköpfen passen, und das Datenpaket, das nicht zu den durch die BBF-Zugangsnetzkomponente empfangenen und gespeicherten Informationen zu äußeren IP-Paketköpfen passt, gemäß einer Richtlinie der BBF-Zugangsnetzkomponente einem Scheduling zu unterziehen.

12. BBF-Zugangsnetzsystem nach Anspruch 11, das ferner Folgendes umfasst: ein Broadband Policy Control Framework, BPCF, wobei:
das BPCF konfiguriert ist, um: nachdem ein Evolved Packet Data Gateway, ePDG, des 3GPP-Netzes die Informationen zu äußeren IP-Paketköpfen über ein Packet Data Network Gateway, P-GW, an eine Policy and Charging Rules Function, PCRF, gesendet hat, die durch die PCRF gesendeten Informationen zu äußeren IP-Paketköpfen zu empfangen; oder, nachdem das ePDG die Informationen zu äußeren IP-Paketköpfen direkt an die PCRF gesendet hat, die durch die PCRF gesendeten Informationen zu äußeren IP-Paketköpfen zu empfangen; oder, nachdem das P-GW die Informationen zu äußeren IP-Paketköpfen an die PCRF gesendet hat, die durch die PCRF gesendeten Informationen zu äußeren IP-Paketköpfen zu empfangen und die Informationen zu äußeren IP-Paketköpfen an die BBF-Zugangsnetzkomponente zu senden; oder
die durch ein Security Gateway, SeGW, des 3GPP-Netzes über eine H(e)NB Policy Function, H(e)NB PF, eines BBF-Zugangsnetzes gesendeten Informationen zu äußeren IP-Paketköpfen zu empfangen; oder
die durch das SeGW über die PCRF gesendeten Informationen zu äußeren IP-Paketköpfen zu empfangen und die Informationen zu äußeren IP-Paketköpfen an die BBF-Zugangsnetzkomponente zu senden.

## Revendications

1. Procédé de commande de politique, **caractérisé par le fait qu'**il comprend :
une entité de réseau d'accès à un forum à large bande (BBF) recevant et sauvegardant des informations d'en-tête de paquet de protocole Internet (IP) externe envoyées par une entité de réseau de projet de partenariat de troisième génération (3GPP) ; dans lequel ledit en-tête de paquet IP externe est un en-tête d'un paquet IP de la sécurité de protocole Internet (IPSec) ou est un en-tête d'une prise en charge IPv6 mobile pour un tunnel d'hôtes et de routeurs en double pile (DSMIPv6) ;
l'entité de réseau d'accès à un forum BBF effectuant un filtrage en fonction des informations d'en-tête de paquet IP externe reçues lorsque des données atteignent le réseau d'accès à un forum BBF ;
l'entité de réseau d'accès à un forum BBF programmant un paquet de données en fonction d'un point de code de services différenciés (DSCP) du paquet de données lorsque des informations d'en-tête de paquet IP externe du paquet de données correspondent aux informations d'en-tête de paquet IP externe reçues par l'entité de réseau d'accès à un forum BBF et l'entité de réseau d'accès à un forum BBF programmant le paquet de données qui ne correspond pas aux informations d'en-tête de paquet IP externe reçues et sauvegardées par l'entité de réseau d'accès à un forum BBF en fonction d'une politique de l'entité de réseau d'accès à un forum BBF.

2. Procédé de commande de politique selon la revendication 1, dans lequel l'étape d'une entité de réseau d'accès à un forum BBF recevant des informations d'en-tête de paquet IP externe envoyées par une entité de réseau 3GPP comprend :
une passerelle de données par paquets évoluée (ePDG) d'un réseau 3GPP envoyant les informations d'en-tête de paquet IP externe à une fonction de règles de politique et de facturation (PCRF) au moyen d'une passerelle de réseau de données par paquets (P-GW), la fonction PCRF envoyant les informations d'en-tête de paquet IP externe à une architecture de commande de politique de large bande (BPCF) d'un réseau d'accès à un forum BBF et l'architecture BPCF envoyant les informations d'en-tête de paquet IP externe à l'entité de réseau d'accès à un forum BBF ; ou
la passerelle ePDG envoyant directement les informations d'en-tête de paquet IP externe à la fonction PCRF, la fonction PCRF envoyant les informations d'en-tête de paquet IP externe à l'architecture BPCF et l'architecture BPCF envoyant les informations d'en-tête de paquet IP externe à l'entité de réseau d'accès à un forum BBF ; ou
la passerelle P-GW envoyant les informations d'en-tête de paquet IP externe à la fonction PCRF, la fonction PCRF envoyant les informations d'en-tête de paquet IP externe à l'architecture BPCF et l'architecture BPCF envoyant les informations d'en-tête de paquet IP externe à l'entité de réseau d'accès à un forum BBF ; ou
la passerelle ePDG envoyant les informations d'en-tête de paquet IP externe à la fonction PCRF au moyen de la passerelle P-GW, la fonction PCRF envoyant les informations d'en-tête de paquet IP externe à l'entité de réseau d'accès à un forum BBF ; ou
la passerelle ePDG envoyant directement les informations d'en-tête de paquet IP externe à la fonction PCRF, la fonction PCRF envoyant les informations d'en-tête de paquet IP externe à l'entité de réseau d'accès à un forum BBF ; ou
la passerelle P-GW envoyant les informations d'en-tête de paquet IP externe à la fonction PCRF, la fonction PCRF envoyant les informations d'en-tête de paquet IP externe à l'entité de réseau d'accès à un forum BBF.

3. Procédé de commande de politique selon la revendication 1, dans lequel l'étape d'une entité de réseau d'accès à un forum BBF recevant des informations d'en-tête de paquet IP externe envoyées par une entité de réseau 3GPP comprend :
une passerelle de sécurité (SeGW) du réseau 3GPP envoyant les informations d'en-tête de paquet IP externe à une fonction de politique de noeud H(e)NB (H(e)NB PF) du réseau d'accès à un forum BBF, la fonction H(e)NB PF envoyant les informations d'en-tête de paquet IP externe à l'architecture BPCF et l'architecture BPCF envoyant les informations d'en-tête de paquet IP externe à l'entité de réseau d'accès à un forum BBF ; ou
la passerelle SeGW envoyant les informations d'en-tête de paquet IP externe à la fonction PCRF, la fonction PCRF envoyant les informations d'en-tête de paquet IP externe à l'architecture BPCF et l'architecture BPCF envoyant les informations d'en-tête de paquet IP externe à l'entité de réseau d'accès à un forum BBF ; ou
la passerelle SeGW du réseau 3GPP envoyant les informations d'en-tête de paquet IP externe à la fonction H(e)NB PF, la fonction H(e)NB PF envoyant les informations d'en-tête de paquet IP externe à l'entité de réseau d'accès à un forum BBF ; ou
la passerelle SeGW envoyant les informations d'en-tête de paquet IP externe à la fonction PCRF, la fonction PCRF envoyant les informations d'en-tête de paquet IP externe à l'entité de réseau d'accès à un forum BBF.

4. Procédé de commande de politique selon la revendication 3, dans lequel l'étape de la fonction H(e)NB PF envoyant les informations d'en-tête de paquet IP externe à l'architecture BPCF comprend :
lors de l'amorce d'un établissement d'une session d'interconnexion de politiques à l'architecture BPCF, la fonction H(e)NB PF envoie les informations d'en-tête de paquet IP externe à l'architecture BPCF ;
l'étape de la fonction PCRF envoyant les informations d'en-tête de paquet IP externe à l'architecture BPCF comprend :
lors de l'amorce de l'établissement d'une session d'interconnexion de politiques à l'architecture BPCF, la fonction PCRF envoie les informations d'en-tête de paquet IP externe à l'architecture BPCF.

5. Procédé de commande de politique selon l'une quelconque des revendications 1 ou 2, dans lequel les informations d'en-tête de paquet IP externe comprennent au moins une adresse IP d'un équipement utilisateur (UE), obtenue de l'entité de réseau d'accès à un forum BBF ;
ou
dans lequel les informations d'en-tête de paquet IP externe comprennent une adresse IP d'une passerelle ePDG ou d'une passerelle P-GW et une adresse IP d'un équipement utilisateur (UE), obtenues de l'entité de réseau d'accès à un forum BBF ;
ou
dans lequel, si un NA(P)T est détecté entre l'équipement utilisateur et la passerelle ePDG ou entre l'équipement utilisateur et la passerelle P-GW, les informations d'en-tête de paquet IP externe comprennent un numéro de port de source de protocole de datagramme d'utilisateur (UDP) et l'adresse IP de l'équipement utilisateur obtenue de l'entité de réseau d'accès à un forum BBF,
dans lequel le numéro de port de source de protocole UDP est un numéro de port de source de protocole UDP de sécurité IPSec ou un numéro de port de source de protocole UDP d'une signalisation de mise à jour de liaison DSMIP.

6. Procédé de commande de politique selon la revendication 1, 3 ou 4, dans lequel les informations d'en-tête de paquet IP externe comprennent au moins une adresse IP d'un noeud H(e)NB, obtenue de l'entité de réseau d'accès à un forum BBF,
ou
dans lequel, si un NA(P)T est détecté entre le noeud H(e)NB et la passerelle SeGW, les informations d'en-tête de paquet IP externe comprennent un numéro de port de source de protocole UDP et l'adresse IP du noeud H(e)NB obtenue de l'entité de réseau d'accès à un forum BBF,
dans lequel le numéro de port de source de protocole UDP est un numéro de port de source de protocole UDP de sécurité IPSec.

7. Procédé de commande de politique selon la revendication 5 ou 6, dans lequel les informations d'en-tête de paquet IP externe sont un filtre de paquets contenant des informations correspondantes.

8. Système de commande de politique, **caractérisé par le fait qu'**il comprend :
une entité de réseau 3GPP et une entité de réseau d'accès à un forum à large bande (BBF), dans lequel :
l'entité de réseau 3GPP est configurée pour envoyer des informations d'en-tête de paquet IP externe à l'entité de réseau d'accès à un forum BBF ; dans lequel ledit en-tête de paquet IP externe est un en-tête d'un paquet IP de la sécurité de protocole Internet (IPSec) ou est un en-tête d'une prise en charge IPv6 mobile pour un tunnel d'hôtes et de routeurs en double pile (DSMIPv6) ;
l'entité de réseau d'accès à un forum BBF est configurée pour effectuer un filtrage en fonction des informations d'en-tête de paquet IP externe reçues lorsque des données atteignent le réseau d'accès à un forum BBF ;
l'entité de réseau d'accès à un forum BBF est configurée pour programmer un paquet de données en fonction d'un point de code de services différenciés (DSCP) du paquet de données lorsque des informations d'en-tête de paquet IP externe du paquet de données correspondent aux informations d'en-tête de paquet IP externe reçues et sauvegardées par l'entité de réseau d'accès à un forum BBF et l'entité de réseau d'accès à un forum BBF programme le paquet de données qui ne correspond pas aux informations d'en-tête de paquet IP externe reçues et sauvegardées par l'entité de réseau d'accès à un forum BBF en fonction d'une politique de l'entité de réseau d'accès à un forum BBF.

9. Système de commande de politique selon l'une quelconque des revendications 8, dans lequel les informations d'en-tête de paquet IP externe comprennent au moins une adresse IP d'un équipement utilisateur (UE), ou une adresse IP d'un noeud H(e)NB obtenue de l'entité de réseau d'accès à un forum BBF,
ou
dans le cas où les informations d'en-tête de paquet IP externe comprennent une adresse IP d'un équipement utilisateur (UE) obtenue de l'entité de réseau d'accès à un forum BBF et dans lequel les informations d'en-tête de paquet IP externe comprennent une adresse IP d'une passerelle ePDG ou d'une passerelle P-GW,
ou
dans lequel, si un NA(P)T est détecté entre l'équipement utilisateur et la passerelle ePDG ou entre l'équipement utilisateur et la passerelle P-GW, les informations d'en-tête de paquet IP externe comprennent un numéro de port de source de protocole UDP et l'adresse IP de l'équipement utilisateur obtenue de l'entité de réseau d'accès à un forum BBF,
dans lequel le numéro de port de source de protocole UDP est un numéro de port de source de protocole UDP de sécurité IPSec ou un numéro de port de source de protocole UDP d'une signalisation de mise à jour de liaison DSMIP,
dans le cas où les informations d'en-tête de paquet IP externe comprennent au moins une adresse IP d'un noeud H(e)NB obtenue de l'entité de réseau d'accès à un forum BBF et dans lequel, si un NA(P)T est détecté entre le noeud H(e)NB et la passerelle SeGW, les informations d'en-tête de paquet IP externe comprennent un numéro de port de source de protocole UDP,
dans lequel le numéro de port de source de protocole UDP est un numéro de port de source de protocole UDP de sécurité IPSec.

10. Système de commande de politique selon la revendication 9, dans lequel les informations d'en-tête de paquet IP externe sont un filtre de paquets contenant des informations correspondantes.

11. Système de réseau d'accès à un forum à large bande (BBF), **caractérisé par le fait qu'**il comprend une entité de réseau d'accès à un forum BBF, dans lequel :
l'entité de réseau d'accès à un forum BBF est configurée pour : recevoir et sauvegarder des informations d'en-tête de paquet IP externe envoyées par un réseau de projet de partenariat de troisième génération (3GPP), dans lequel ledit en-tête de paquet IP externe est un en-tête d'un paquet IP de la sécurité de protocole Internet (IPSec) ou est un en-tête d'une prise en charge IPv6 mobile pour un tunnel d'hôtes et de routeurs en double pile (DSMIPv6) ; effectuer un filtrage en fonction des informations d'en-tête de paquet IP externe reçues lorsque des données atteignent le réseau d'accès à un forum BBF ; et programmer un paquet de données en fonction d'un point de code de services différenciés (DSCP) du paquet de données lorsque des informations d'en-tête de paquet IP externe du paquet de données correspondent aux informations d'en-tête de paquet IP externe reçues et sauvegardées par l'entité de réseau d'accès à un forum BBF et programmer le paquet de données qui ne correspond pas aux informations d'en-tête de paquet IP externe reçues et sauvegardées par l'entité de réseau d'accès à un forum BBF en fonction d'une politique de l'entité de réseau d'accès à un forum BBF.

12. Système de réseau d'accès à un forum BBF selon la revendication 11, comprenant en outre : une architecture de commande de politique de large bande (BPCF), dans lequel :
la fonction BPCF est configurée pour : après qu'une passerelle de données par paquets évoluée (ePDG) du réseau 3GPP envoie les informations d'en-tête de paquet IP externe à une fonction de règles de politique et de facturation (PCRF) au moyen d'une passerelle de réseau de données par paquets (P-GW), recevoir les informations d'en-tête de paquet IP externe envoyées par la fonction PCRF ; ou après que la passerelle ePDG envoie directement les informations d'en-tête de paquet IP externe à la fonction PCRF, recevoir les informations d'en-tête de paquet IP externe envoyées par la fonction PCRF ; ou après que la passerelle P-GW envoie les informations d'en-tête de paquet IP externe à la fonction PCRF, recevoir les informations d'en-tête de paquet IP externe envoyées par la fonction PCRF et envoyer les informations d'en-tête de paquet IP externe à l'entité de réseau d'accès à un forum BBF ; ou
recevoir les informations d'en-tête de paquet IP externe envoyées par une passerelle de sécurité (SeGW) du réseau 3GPP au moyen d'une fonction de politique de noeud H(e)NB (H(e)NB PF) d'un réseau d'accès à un forum BBF ; ou recevoir les informations d'en-tête de paquet IP externe envoyées par la passerelle SeGW au moyen de la fonction PCRF et envoyer les informations d'en-tête de paquet IP externe à l'entité de réseau d'accès à un forum BBF.
